# EUROPEAN PATENT APPLICATION

(11) **EP 4 580 303 A1**
(43) Date of publication of application: **02.07.2025**
(21) Application number: 23220297.8
(22) Date of filing: 27.12.2023
(51) Int. Cl.: H04W 76/15, H04W 84/02

(54) **METHODS AND DEVICES FOR RADIO COMMUNICATION NETWORKS**

(71) Applicant: INTEL Corporation, Santa Clara, CA 95054 (US)
(72) Inventor: DAS, Sajal Kumar, 560115 Bangalore (IN); SANGLE, Parshuram, Bengaluru (IN); SINGH, Vaibhav, 110014 New Delhi (IN); KUMAR, Brijesh, 282007 Agra (IN); PAMMI, Lakshmiravikanth, 534112 Dubacherla (IN); PEDDIREDDY, Prathibha, 560087 Bangalore (IN); R, Aneesh, 560035 Bangalore (IN); SAGAR T D, Sachin, Santa Clara, CA, 95054 (US); SHAH, Nehal Bakulchandra, Santa Clara, CA, 95054 (US); TUMKUR NARAYAN, Chethan, 560091 Bengaluru (IN); V, Premnath Babu, 560049 Bangalore (IN)
(74) Representative: Viering, Jentschura & Partner mbB Patent- und Rechtsanwälte

(57) **Abstract**

An apparatus of a communication device, the apparatus comprising a processor con-figured to: establish a first connection through a first radio frequency interface; establish a second connection through a second radio frequency interface, wherein the first connection is a nonsecure connection and the second connection is a secure connection; determine a result representing whether data is routed for the first connection or the second connection; instruct the data to be transmitted with one of the first connection or the second connection based on the result.

## Description

### Technical Field

This disclosure generally relates to methods and devices for radio communication networks.

### Background

Many wireless communication technologies, in particular, short-range wireless communication technologies (e.g. Bluetooth, Wi-Fi Direct) may allow communication between primary devices and secondary devices using established short-range wireless communication links. In consideration of various use cases for a device that is capable communication via short-range wireless communication technologies, it may be desirable to increase connectivity and quality of experience (QoE) of short-range wireless communication devices.

In mobile radio communication networks in accordance with many mobile radio communication technologies, such as Fourth Generation (LTE) and Fifth Generation (5G) New Radio (NR), there are various techniques that are applied to control power consumption of entities, such as network access nodes, within the cellular communication network.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a wireless network environment;
FIG. 4 shows an exemplary illustration of various communication elements of an apparatus for a wireless communication device;
FIG. 5 shows an exemplary apparatus for a communication device;
FIG. 6 shows an example illustrating connections in a network environment;
FIG. 7 shows an example of a flow diagram;
FIG. 8 illustrates an example of a communication flow diagram;
FIG. 9 shows an example of an illustrative diagram for a determination of a computing task to be offloaded to a further communication device;
FIG. 10 illustrates an example of a use case including offloading of a computing task;
FIG. 11 shows an illustrative example of including a mediator for cloud computing;
FIG. 12 shows an exemplary illustration of cells of a mobile communication network;
FIG. 13 shows an illustrative example of states of a renewable energy network access node;
FIG. 14 illustrates an exemplary illustration of network performances;
FIG. 15 shows an example of a processor and a memory of a device;
FIG. 16 shows an exemplary representation of a reinforcement learning (RL) model based AI/ML;
FIG. 17 shows an exemplary radio access network architecture in which the radio access network is disaggregated into multiple units;
FIG. 18 shows an example of a method;
FIG. 19 shows an example of a method;
FIG. 20 shows an example of a method.

### Description

The following detailed description refers to the accompanying drawings that show, by way of illustration, exemplary details and aspects in which aspects of the present disclosure may be practiced.

Short-range wireless communication networks like Bluetooth, WLAN, etc. may often face connection problems, causing disruptions in calls when users move around indoors. These interruptions may happen because of signal interference from other devices, physical barriers like walls, or electromagnetic interference from nearby electronics. The signal strength also may also vary as users move, leading to unstable connections that affect the user experience negatively.

Solving these issues traditionally involves using better technology to handle signal problems, improving antenna designs for wider coverage, and managing how frequencies are used, and the like. It may also be considered important to explore ways to adjust how devices send signals to keep connections stable, especially when users are moving around a lot. Collaboration between device makers, network experts, and standard-setting groups is key to creating stronger solutions for these common connection problems in short-range wireless networks.

As used herein, "communication device" (e.g. a radio communication device) may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, an in-vehicle device, or a device for vehicles, etc.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take the role of a Group Owner (GO) or a Group Client (GC).

In accordance with various aspects of this disclosure, a communication device may communicate with at least one further communication device. In some aspects, a short-range wireless communication device may communicate with at least one further short-range wireless communication device over an established short-range wireless communication link. The short-range wireless communication device may have connections that are established with multiple short-range wireless communication devices simultaneously. Various aspects provided herein may include examples in which short-range wireless communication is Bluetooth (BT) communication and accordingly in respective aspects, a short-range wireless connection may include BT connections. Operations may include BT communication in a BR/EDR mode or in a BLE mode.

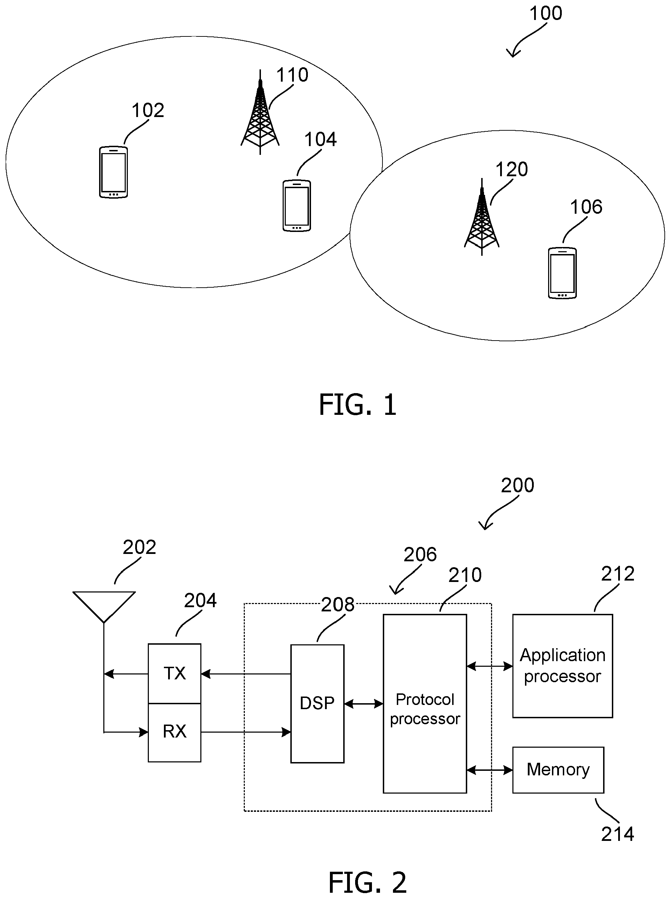

FIGs. 1 and 2 depict a general network and device architecture for wireless communications. In particular, FIG. 1 shows exemplary radio communication network 100 according to some aspects, which may include communication devices depicted as terminal devices 102, 104, and 106 and communication devices depicted as network access node 110. Radio communication network 100 may communicate with terminal devices 102 and 104 via network access node 110 over a radio access network. Although certain examples described herein may refer to a particular radio access network context (e.g., LTE, UMTS, GSM, other 3rd Generation Partnership Project (3GPP) networks, WLAN/WiFi, Bluetooth, SGNR, mmWave, etc.), these examples are demonstrative and may therefore be readily applied to any other type or configuration of radio access network. In various examples, terminal devices 102 and 104 may communicate with each other without involvement of the radio access network, such as over a peer-to-peer network.

In an exemplary cellular context, network access node 110 may be base stations (e.g., eNodeBs, NodeBs, Base Transceiver Stations (BTSs), gNodeBs, or any other type of base station), while terminal devices 102, 104 and 106 may be cellular terminal devices (e.g., Mobile Stations (MSs), User Equipments (UEs), or any type of cellular terminal device). Network access node 110 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. Terminal devices 102 and 104 may exemplarily be terminal devices within the same vicinity (in proximity). The cellular core network may interface with one or more external data networks. In an exemplary short-range wireless context other than BT, network access node 110 and 120 may be access points (APs, e.g., WLAN or WiFi APs), while terminal device 102 and 104 may be short range terminal devices (e.g., stations (STAs)). Network access node 110 may interface (e.g., via an internal or external router) with one or more external data networks. Network access node 110 and terminal devices 102 and 104 may include one or multiple transmission/reception points (TRPs). In an example of a BT network, network access node 110 and 120 may be a primary device of the BT network (e.g. piconet) and terminal devices 102 and 104 may be a secondary device of the BT network.

Network access node 110 (and, optionally, other network access nodes of radio communication network 100 not explicitly shown in FIG. 1) may accordingly provide a radio access network to terminal devices 102, 104, and 106 (and, optionally, other terminal devices of radio communication network 100 not explicitly shown in FIG. 1). In an exemplary cellular context, the radio access network provided by network access node 110 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access node 110 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access node 110 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device. The communication device may include a terminal device 102 according to some aspects, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software.

Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Illustratively, in cellular context, the protocol processor 210 may perform protocol stack functions of a cellular protocol stack (e.g. LTE, NR, 6G, etc.). In wireless local area network (WLAN) context, the protocol processor 210 may perform protocol stack functions of an IEEE 802.11 communication protocol stack in accordance with any known version of the protocol. In BT context, the protocol processor 210 may perform protocol stack functions of a BT communication protocol.

Terminal device 102 may also include application processor 212 and memory 214. Application processor 212 may be a CPU, and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack and provide the resulting data to digital signal processor 208.

Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

There are various aspects provided in this disclosure, which are related to various radio communication networks and various radio communication devices configured for radio communication in various radio communication networks, sometimes according to different radio communication protocols, such as WLAN (Wi-Fi), cellular, BT communication protocols.

In accordance with various aspects provided herein, communication devices can connect to a plurality of other communication devices such as servers, printers, and other user devices simultaneously via a local area network (LAN). Those other communication devices can be located within proximity to the communication devices. For example, a printer device can be physically located within a certain proximity to a communication device (e.g. a computer) for printing purposes. In some examples, other communication devices may also be remote devices, such as servers. Illustratively, a user device can connect to a server to perform various tasks. Some of the nearby and/or remote devices may require secure connections for the communication device to connect those devices via a designated network (e.g. Wireless Wide Area Network (WWAN), internet). However, some other devices may not require secure connections and/or may not work over secure connections. Secure connections may particularly include virtual private network (VPN) connections.

In accordance with various aspects provided herein, an application for a computer user to connect one's personal computer (PC) to a mobile phone so that a file transfer can be seamlessly performed between the PC and the mobile phone. The application can allow the PC to receive and/or text messages from the PC without requiring switching to mobile phone to send and/or receive a text message. In such cases in which the application is in action, the connection between the PC and the mobile phone does not require a secure connection (e.g., VPN connection) and the connection may be a direct device-to-device (D2D) connection.

On the other hand, when the PC needs to connect to a remote server, the connection may require a secure connection or otherwise may fail. The infrastructure available today to users may be inadequate when the user device needs to simultaneously connect to some devices using a secure connection, and the other devices using non-secure connection over a WLAN (i.e. Wi-Fi). For example, the user device cannot execute such an application to allow connection between the PC and the mobile phone, if the user device simultaneously connects (or is already connected) to another device or network using secure connection. The challenge is the user may be in need of establishing a simultaneous connection between the PC and the mobile phone using non-secure connection as well as between the PC and the other device/network using secure connection (e.g., VPN connection).

In more detail, in the contemporary landscape of interconnected devices, communication devices may be interlinked with multiple other communication devices via a local area network. These connections may vary in terms of their proximity or remote accessibility. Certain connections may necessitate secure connectivity through a Virtual Private Network (VPN) to establish a link over the internet. Conversely, there may be also connections, such as an application facilitating mobile-PC interaction, which do not operate over secure VPN connections.

Traditionally, within the current infrastructure framework, a significant limitation may be considered as present. Communication devices, traditionally, do not concurrently sustain both secure and non-secure connections over a Wi-Fi network simultaneously. This means that while a user is engaged in a VPN connection to access a network securely, the execution of applications like 'Unison' for mobile-PC interactions may become infeasible. Consequently, this may present a formidable challenge for users who seek seamless connectivity, desiring to operate certain applications over VPN while simultaneously engaging others without the constraints of a VPN connection.

In various aspects described herein, methods and devices are provided to overcome some of the problems mentioned above. In some aspects, a communication device may establish a secure connection and a non-secure connection via different RF interfaces to route data (e.g. application data) to be transmitted by the communication device. In some examples, different internet protocol addresses may be associated with a first route including one of the RF interfaces and a second route including another one of the RF interfaces. Accordingly, the communication device may transmit RF signals including data provided for secure connections via a first physical link, while the communication device may transmit further RF signals including data provided for non-secure connections via a second physical link.

In accordance with various aspects provided herein, the communication device having an established connection with a remote device may be a low-end computing device. Low-end computing devices are such devices that they lack dedicated hardware accelerators such as a field programmable gate array (FPGA) designated to perform high-demanding computations. Those devices may typically be restricted in terms of capabilities of their central processing unit (CPU) or they may need to utilize cloud computing solutions to carry out complex computations which may not be performed by the CPU of the low-end computing device.

The cloud computing, on the other hand, may rely on high-end remote servers capable of performing such tasks. The user may obtain decoded outputs as the remote server streams the output to the user over an unreliable network. The unreliable nature of the used network may lead to transmission errors or data packet loss without prompting a warning, and the like. Besides, cloud computing solutions are generally dependent on network latency and bandwidth availability.

In accordance with various aspects provided herein, to overcome some of those restrictions mentioned above, a device-to-device (D2D) communication operations may provide a framework for data and computation offloading to nearby devices. Nevertheless, the framework may be limited to generic CPU computation offloading and may not effectively utilize specific platform accelerators available on a peer device in vicinity of the low-end computing device. That may refer to that the offloading defined by the framework relies on CPU offloading alone without taking advantage of the possibility of using an available accelerator residing in a peer device available for offloading.

Another issue of existing D2D computation offloading framework may lie in the consideration that computation offloading decision is taken without being aware of the hardware capabilities of the peer device. Therefore, the framework is unable to perform a pro-active discovery of the hardware capabilities of the peer device as there is no defined protocol to search for it. Overall, existing protocol relies on the program or the computation task offloaded to peer device to utilize hardware resources intensively so that exemplary a relative better latency or a decreased runtime may be obtained. Thus, a need for a mechanism capable of revealing the hardware capabilities of the peer device prior to offloading and evaluating the performance of local execution of a task or program (i.e. performed by the low-end user device) compared to offload execution (i.e. performed by the peer device).

In essence, in accordance with various aspects provided herein, some communication devices may rely on remote processing, such as edge computing or cloud computing etc. for various resources. Through configurations suitable for remote processing, a communication device may cause various types of computing tasks to be performed by further communication devices. However, the efficiency of this solution may remain contingent upon network latency, constrained by network reliability, and constrained by available bandwidth.

In accordance with various aspects provided herein, instead of offloading computing tasks via WWAN or complex and remote communication networks, such a communication device may offload computing tasks via established device to device (D2D) communications facilitating data and computation offloading to proximate devices. In accordance with various aspects provided herein, certain messaging protocols may be used to facilitate the offloading. In accordance with various aspects provided herein, the communication device may determine offloading decisions based on information about established or available to be established D2D links.

Radio access networks (RAN) and/or open radio access networks (O-RAN) may suffer from power consumption and elevated carbon footprint. A solution may be needed to reduce power consumption without severely affecting the quality of service (QoS) as well as to reduce the carbon footprint emerged by the conventional power use of the network access nodes in the RAN and/or O-RAN.

In accordance with various aspects described herein, radio access network infrastructure, particularly within the realm of network energy consumption, a great portion of the energy consumed within the cellular network structure can be associated to the Radio Access Network (RAN). This critical segment of network architecture may include multifaceted components which traditionally operate under a Cell On-Off use case framework as established in the Open Radio Access Network (O-RAN) and 3GPP standards. Fundamentally, these components within the RAN may exist in binary states-either active or inactive, in terms of power consumption. However, a decisive hard switch-off mechanism for these components can potentially lead to Quality of Service (QoS) degradation, posing a challenge in managing power efficiency without compromising network performance.

The pursuit to navigate this balance between energy optimization and performance resilience may stem from stringent global regulations targeting carbon emissions. The imperative to curtail the carbon footprint within RAN operations may have prompted operators to pivot toward strategies that minimize power consumption while safeguarding QoS benchmarks.

In this context, the incorporation of renewable energy sources may emerge as a pivotal solution to mitigate the environmental impact of network operations. Leveraging these renewable resources may hold the promise of reducing the carbon footprint inherent in traditional energy consumption models, thereby aligning network infrastructure with sustainability goals while sustaining operational efficiency.

In essence, the optimization of RAN power utilization may become a strategic imperative for operators seeking to uphold service quality, comply with environmental standards, and mitigate the ecological impact of their network operations. This pursuit may involve an interplay between energy conservation, QoS maintenance, and the integration of renewable energy sources within the network architecture as a confluence that may shape the trajectory of sustainable technological evolution within the telecommunications landscape.

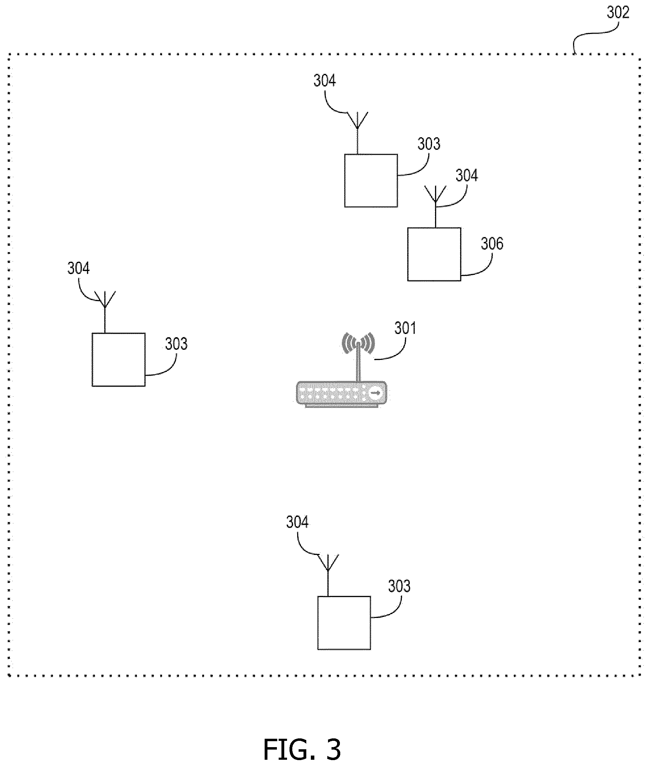

FIG. 3 shows an exemplary illustration of a wireless network environment including various types of terminal devices in accordance with various aspects of this disclosure. The network environment is depicted to include various types of wireless terminal devices configured to communicate with radio communication signals in the network. The network 300 may include one or more access points 301 that provides access to the network according to a communication technology, which may include a short-range radio communication technology governed by a first communication protocol, such as Wi-Fi, governed by the IEEE 802.11 communication protocol, configured provide services within a coverage area 302. There may be various types of terminal devices 303 within the network including various circuits and components configured to receive and transmit radio communication signals according to the first communication protocol using an antenna 305 for the respective radio communication signals according to the IEEE 802.11 communication protocol. Accordingly, the terminal devices 303 may access the network 300 that over the one or more access points 301.

In various examples, the terminal devices 303 may also be configured to communicate with another terminal device that is within a certain proximity to a respective terminal device 303 using the communication protocol. For example, the terminal devices 303 may include various circuits and components configured to receive and transmit radio communication signals (Wi-Fi signals).

It is depicted in this illustrative example that the antenna 304 is a single antenna but this may not be limiting. The antenna 304 may be designated to have only one antenna for IEEE 802.11 communication protocol. Each antenna 304 may include a plurality of antennas configured to operate in a complementary manner to support multiple antenna technologies, such as maximum ratio combining, beamforming, etc. Terminal devices 303, 306 may include further antennas that are designated to be used for further radio communication technologies that a respective terminal device may be configured to operate.

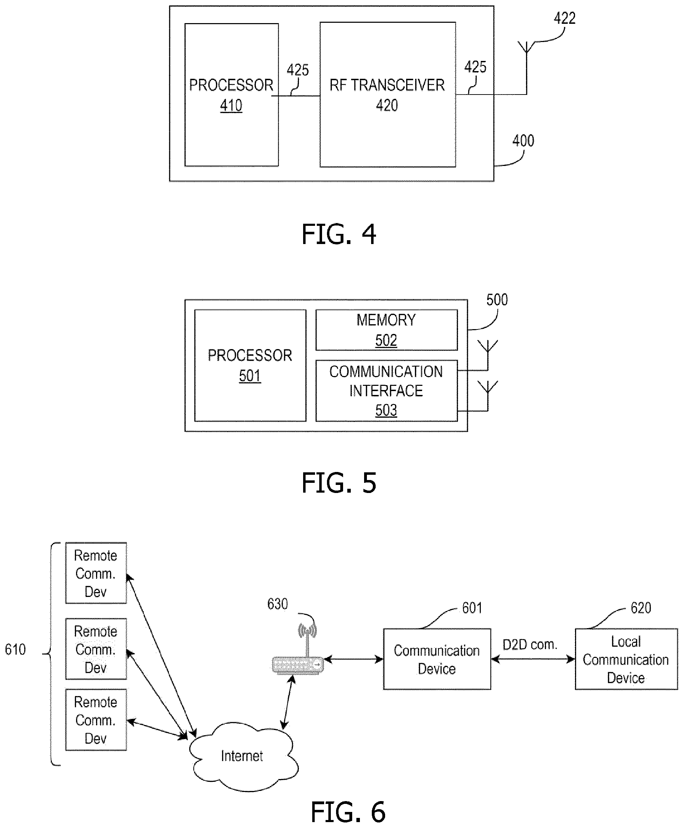

FIG. 4 shows an exemplary illustration of various communication elements of an apparatus for a wireless communication device (e.g. the communication device 200). The apparatus 400 may include processing circuitry 410 (e.g. the baseband modem 206, the application processor 212) that may direct and manage communication operations of the apparatus 400 according to one or more radio communication protocols and may control transmission/reception of communication signals over at least one or more antenna 422 via an RF transceiver 420. The processing circuitry 410 may include an interface to the RF transceiver 420. The RF transceiver 420 may include at least one RF-chain to process the communication signals associated with the antenna 422 respectively. The apparatus 400 may include the antenna 422, or the apparatus 400 may include an antenna interface couplable to the antenna 422.

It is to be noted that the apparatus 400 is depicted as being couplable to the antenna 422, but the apparatus 400 may be couplable to a plurality of antennas, and thereby the RF transceiver 420 may include a plurality of RF-chains, each RF-chain may process communication signals for a respective antenna. Each RF-chain of the plurality of RF-chains may be coupled to the processing circuitry 410 via a corresponding RF-interface. In some examples, each RF interface may include the corresponding RF-chain of the plurality of RF-chains. The apparatus 400 may transmit and receive radio communication signals with the antenna 422. The apparatus 400 may act as an RF transmitter (e.g. RF transmit circuit) to transmit radio communication signals and it may also act as an RF receiver (e.g. RF receive circuit) to receive radio communication signals. In accordance with various aspects described herein, amplifiers referred to in accordance with aspects described in FIG. 4 (e.g. PAs) may include aspects described in this disclosure, e.g. one or more amplifier circuitries.

The processing circuitry 410 may include, or may be implemented, partially or entirely, by circuit and/or logic, e.g., a processor including circuit and/or logic, a memory circuit and/or a logic, which may be configured to manage radio communication operations. The processing circuitry 410 may be configured to communicate with an external main processor (e.g. a host processor, a central processing unit (CPU), a system on chip (SoC)) of the wireless communication device including the apparatus 400 via a designated interface that is coupled to the main processor. In some examples, the processing circuitry 410 may be the main processor of the wireless communication device. The processing circuitry 410 may also access the main memory of the respective wireless communication device via the designated interface. The processing circuitry 410 may further include an interface to the RF transceiver 420.

The processing circuitry 410 may include a digital signal processor (e.g. the digital signal processor 208). The digital signal processor 208 may be configured to perform one or more of error detection, forward error correction encoding/decoding, channel coding, and interleaving, channel modulation/demodulation, physical channel mapping, radio measurement and search, frequency and time synchronization, antenna diversity processing, power control, and weighting, rate matching/de-matching, retransmission processing, interference cancelation, and any other physical layer processing functions.

The processing circuitry 410 may include a modem configured to process baseband signals received from/sent to the antenna 422 via a communication path 425 including a respective RF-chain. In various examples, the interface to the RF transceiver 420 of the processing circuitry 410 may be configured to couple the processing circuitry 410 to the communication path 425. Accordingly, the processing circuitry 410 may include Media-Access Control (MAC) circuit and/or logic, Physical Layer (PHY) circuit and/or logic, baseband (BB) circuit and/or logic, a BB processor, a BB memory, Application Processor (AP) circuit and/or logic, an AP processor, an AP memory, and/or any other circuit and/or logic. By way of example, the processing circuitry 410 can perform baseband processing on the digital baseband signals to recover data included in wireless data transmissions.

In some examples, multiple RF-chains may be associated with multiple processing chains of the processing circuitry. Illustratively, a first one or more RF-chains may be associated with a first processing chain, illustratively including a first PHY functions and a first MAC functions, and/or a first baseband processing functions etc. to process signals received from the first one or more RF-chains according to a first processing chain. Further, a second one or more RF-chains may be associated with a second processing chain, illustratively including a second PHY functions and a second MAC functions, and/or a second baseband processing functions, etc. to process signals received from the second one or more RF-chains. In other words, the apparatus 400 may include a first transceiver (e.g. first radio unit) including the first processing chain and the first one or more RF-chains, and a second transceiver (e.g. second radio unit) including the second processing chain and the second one or more RF-chains.

The processing circuitry 410 may control and/or arbitrate transmit and/or receive functions of the apparatus 400, and perform one or more baseband processing functions (e.g., media access control (MAC), encoding/decoding, modulation/demodulation, data symbol mapping, error correction, etc.). The processing circuitry 410 may be configured to provide control functions to the RF transceiver 420 (e.g. to the RF-chain to control and/or arbitrate transmitting and/or receiving radio communication signals). In aspects, functions of processing circuitry 410 can be implemented in software and/or firmware executing on one or more suitable programmable processors, and may be implemented, for example, in a field programmable gate array (FPGA), application specific integrated circuit (ASIC), etc. In various examples, the interface to the RF transceiver 420 of the processing circuitry 410 may be configured to couple processing circuitry to the RF transceiver to provide communication in-between.

The RF transceiver 420 may provide RF processing of communication signals conveyed via a communication path within a respective RF-chain to transmit radio communication signals via a respective antenna based on signals (e.g. baseband communication signals, digital signals) received from the processing circuitry 410 over the communication path. The RF transceiver 420 may provide RF processing of communication signals conveyed via the communication path 425 to receive radio communication signals via the antenna 422 and provide signals to the processing circuitry 410 over the communication path 425. The processing circuity 410 may be configured to control operations of the RF transceiver 420. The RF transceiver 420 may include a receive path to provide RF processing to receive radio communication signals received from the antenna 422, and a transmit path to provide RF processing to transmit radio communication signals transmitted via the antenna 422.

In a receive (RX) path, The RF transceiver 420 may receive analog radio frequency signals from the antenna 422 via the communication paths 425 and perform analog and digital RF front-end processing on the analog radio frequency signals to produce digital baseband samples (e.g., In-Phase/Quadrature (IQ) samples) to provide to the processing circuitry 410. In various examples, RF transceiver 420 may include two RF-chains per antenna element, each RF-chain may be designated for a particular polarization. The RF transceiver 420 may include analog and digital reception components including amplifiers (e.g., Low Noise Amplifiers (LNAs)), filters, RF demodulators (e.g., RF IQ demodulators)), and analog-to-digital converters (ADCs), which RF transceiver 420 may utilize to convert the received radio frequency signals to digital baseband samples.

In a transmit (TX) path, the RF transceiver 420 may receive digital baseband samples from processing circuitry 410 and perform analog and digital RF front-end processing on the digital baseband samples to produce analog radio frequency signals to be provided to the antenna 422 via the communication paths 425 for radio transmission. The RF transceiver 420 may thus include analog and digital transmission components including amplifiers (e.g., Power Amplifiers (PAs), filters, RF modulators (e.g., RF IQ modulators), and digital-to-analog converters (DACs), which the RF transceiver 420 may utilize to mix the digital baseband samples received from processing circuitry 410 and produce respective analog radio frequency signals for radio transmission by the antenna 422. In some aspects, the processing circuitry 410 may control the radio transmission and reception of the RF transceiver 420, including specifying the transmit and receive radio frequencies for the operation of the RF transceiver 420. In some examples, the RF transceiver 420 may include a DTX architecture. In some examples, operations associated with the digital front-end may be provided by the processing circuitry 410 as well, or in other words, the processing circuitry 410 may include the digital front-end.

FIG. 5 shows an exemplary apparatus for a communication device. The apparatus 500 may include a processor 501. The processor 501 may include a central processing unit, a graphics processing unit, a hardware acceleration unit, a neuromorphic chip, and/or a controller. The processor 501 may be implemented in one processing unit, e.g. a system on chip (SOC), or an integrated system or chip. The processor 501 may include more than one processing unit configured to provide various aspects as mentioned herein. In various examples, the communication may include the apparatus 500, and the processor 501 may be one or more processors of the communication device (e.g. application processor 212 and optionally protocol processor 210 and digital signal processor 208 as exemplarily provided with respect to FIG. 2).

The apparatus 500 may further include a memory 502 to store data. The memory 502 may store an operating system (not shown) including instructions configured to manage various operations of the processor 501, the memory 502, and the communication interface 503, and may further manage operations of the communication device. The processor 501 and memory 502 (and also other various components of the apparatus) and other entities may be communicatively coupled over an internal interface to communicate with each other (e.g. a bus, wires, etc.).

The communication interface 503 may cause the apparatus 500 to communicate with further devices (e.g. other communication devices), and accordingly the processor 501 may manage the communications with other communication devices for the communication device 500. The communication interface 503 various components, as exemplarily provided in accordance with FIG. 2, such as antenna system 202 including an antenna, radio frequency (RF) transceiver 204, baseband modem 206 (including digital signal processor 208 and protocol controller 210). In some examples, the communication interface 503 may include the apparatus 400 as described in accordance with FIG. 4.

In various examples, the apparatus 500 is an apparatus of a BT communication device and the communication interface 503 may be configured to transmit and/or receive radio communication signals, via one or more antennas, according to BT communication protocol. The communication interface 503 may include a separate application processor, and memory, or in various examples, the processor 501 and the memory 502 may provide functions of an application processor and memory for communication purposes for the BT communication protocol. The communication interface 503 may further be configured to perform communications according to another communication protocol. Accordingly, the communication interface 503 may include multiple transceivers, each transceiver being configured to operate for a particular radio communication protocol.

In various examples in which the apparatus is for a BT communication device, the processor 501 may perform BT host functions and BT controller functions of a BT protocol stack. The communication interface 503 may include a BT radio circuitry configured to transmit and/or receive BT radio communication signals.

In various examples, the apparatus 500 is an apparatus of a WLAN communication device and the communication interface 503 may be configured to transmit and/or receive radio communication signals, via one or more antennas, according to an IEEE 802.11 communication protocol. The communication interface 503 may include a separate application processor, and memory, or in various examples, the processor 501 and the memory 502 may provide functions of an application processor and memory for communication purposes for the IEEE 802.11 communication protocol. The communication interface 503 may further be configured to perform communications according to another communication protocol. Accordingly, the communication interface 503 may include multiple transceivers, each transceiver being configured to operate for a particular radio communication protocol.

In various examples in which the apparatus is for a WLAN communication device, the processor 501 may perform functions of an IEEE 802.11 protocol stack. The communication interface 503 may include a WLAN radio circuitry configured to transmit and/or receive WLAN radio communication signals.

In various examples, communication interface 503 may be configured to transmit and/or receive radio communication signals via one or more antennas, according to a cellular communication technology, such as LTE, 5G/NR, 6G, etc., as illustratively described in detail in accordance with FIG. 2.

In some examples, the communication circuitry 503 may be configured to transmit and/or receive radio communication signals of different radio access technologies. Illustratively, the communication interface 503 may include a WLAN unit for WLAN communication, a BT unit for BT communication, and a cellular communication unit for cellular communication, and one or more further units for one or more further radio technologies.

In accordance with various aspects described herein, the communication device may perform operations to improve connection issues and disruption in the connectivity at certain locations within the communication environment of which the communication device is provided within, or based on mobility within the environment, illustratively when a user of a mobile device, which may be the communication device or a further communication device connected to the communication device, changes location within the environment. For example, the communication environment may be a WLAN or BT environment. Illustratively, a user may experience such disruptions and issues in the form of connection drops, disconnections, noisy audio calls etc., which may reduce the QoE.

In accordance with various aspects provided herein, the processor may determine a radiation pattern for a plurality of available channels associated with the supported short-range wireless communication technology, illustratively described as BT or WLAN in this disclosure. A radiation pattern may refer to a radiation map representative of the signal strength or radiation pattern of further short-range wireless communication devices within a particular area or environment, which the short-range wireless communication devices may illustratively include further BT devices and/or WLAN devices. The radiation pattern may indicate the signal strength and/or radiation pattern of further short-range wireless communication devices in multiple directions relative to the communication device.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

As described above, in accordance with various aspects provided herein, the apparatus may be configured to communicate through secure and non-secure connections established with different physical links. Illustratively, the processor 501 may execute various types of applications, which require secure or non-secure connections, and the apparatus 500 may meet these requirements of such applications through distinct physical connections. An application as described herein may be an application layer software, and the disclosure may use both terms, namely application and application layer software interchangeably.

In some aspects, the processor 501 may, via designated operations, detect and map such applications automatically without a user intervention, which may result in an increase of user experience. In accordance with various aspects, as applications are distinguished from each other in terms of security requirements, and the dedicated secure connection may ensure secure connection requirements are met, as needed.

In accordance with various aspects described herein, the communication interface 503 may include at least two transceivers to receive and/or transmit RF communication signals over at least two established physical connections. Although various aspects described herein can be applied to various radio communication technologies, such as BT, cellular, etc. as well, aspects may be illustrated with an example in the WLAN context in accordance with IEEE 802.11 communication operations. The skilled person would be able to recognize the aspects which can be implemented using another radio communication technology.

In accordance with various aspects of this disclosure, the apparatus 500 may provide various functions with respect to an established connection with another communication device based on information that may indicate proximity with the another communication device. The apparatus 500 may store information indicating proximity with the another communication device. In various examples, the processor 501 may measure the distance between the apparatus 500 and the another communication device continuously, periodically, and/or aperiodically based on a detectable event. Exemplarily, a detectable event may include detection of a decreased data rate, a data rate below a predefined data rate value, a detected receive power of radio communication signal, power of received radio communication signals being below a predefined power value, etc.

In various examples, the processor 501 may obtain the information indicating proximity with another communication device based on a proximity estimation. A measurement circuit 504 may be configured to measure received radio communication signals, and the processor 501 may obtain the information indicating proximity with another communication device based on an estimation according to the measurement. In various examples, the processor 501 may use the measurement as proximity information with respect to operations associated with the another communication device.

For this purpose, the measurement circuit 504 may measure a signal strength of a received radio communication signal that is received from the another communication device over the established connection according to the respective communication protocol. For this example, the processor 501 and the communication interface 503 may establish the connection to exchange data with the another communication device using an IEEE 802.11 communication protocol. Accordingly, the measurement circuit 504 may measure the strength of radio communication signals received by the antenna 505 coupled to the communication interface 503. The measurement circuit 504 may measure the strength of predefined radio communication signals, such as reference signals transmitted by the another communication device.

The measurement circuit 504 may measure the power of the received radio communication signal and provide an output indicating the measured power to the processor 501. The processor 501 may estimate the proximity based on the output of the measurement circuit 504. In various examples, the processor 501 may use the measured power as a metric to indicate the proximity of the another communication device, and perform further operations with respect to the proximity of the another communication device to the apparatus 500 based on the measured power. A measured power of a received signal may be a measured power value represented in milliwatts (mW) or decibel-milliwatts (dBm). In various examples, the processor 501 may use a quality parameter indicating the quality of the D2D connection as the information indicating the proximity.

In various examples, the processor 501 may obtain an indication with respect to a power value relative to a predefined parameter stored in the memory 502 based on a measured power. The processor 501 may calculate a received signal strength indication (RSSI) according to the predefined parameters stored in the memory 502 based on a measured power.

In accordance with various aspects of this disclosure, the apparatus 500 may receive the information indicating a distance between the apparatus 500 and the another communication device from the another communication device. In such an example, the another communication device may obtain the information indicating the proximity as exemplarily provided for the apparatus 500, and transmit data including the information indicating a distance to the apparatus 500. The processor 501 may use the received information received from the another communication device as a proximity information.

The processor 501 may determine that whether an established connection with the another communication device is adversely affected, or is to be adversely affected, based on the information indicating the proximity to the another communication device (e.g. an estimate distance between the another communication device and the apparatus 500 or a radio communication device including the apparatus 500). As indicated, the information indicating the proximity may include proximity information obtained with a sensor, or information that is based on the measured power (e.g. absolute power, or the RSSI). In various examples, the information indicating the proximity may be the measured power or the RSSI. The information indicating the proximity may include a value of various levels that is based on the measured power or the RSSI.

For example, the processor 501 may set the information indicating the proximity based on the value of the measurement and a predefined value. The processor 501 may set the information indicating the proximity as "acceptable for a non-secure D2D connection" in case the measurement is above a predefined value, and the processor may set the information indicating the proximity as "not acceptable for a non-secure D2D connection" in case the measurement is below a predefined value in a binary manner.

The processor 501 may obtain measurements with respect to the signal strength (e.g. measured power or RSSI) at different instances of time, and the processor 501 may determine and/or set the information indicating the proximity based on the measurements of plurality instances of time. In various examples, the processor 501 may calculate a change value representing a difference of two measurements, and the processor 501 may determine to terminate the non-secure connection between the communication device and the nearby peer device if the difference indicates that the nearby device is not within a predefined range to maintain the non-secure connection with respect to the first measurement. In that sense, the measurement may result in a value below the predefined value.

In accordance with various aspects of this disclosure, the processor 501 may establish a session to exchange data over the established connection with the another communication device. For example, a wireless device that is configured to exchange audio data may establish an audio session to exchange audio data. An upper layer of the network stack (e.g. application layer) may provide the audio data to be sent, or may receive the audio data that was received according to the established session from lower layers of the network stack. In various examples, the session may be associated with an identifier to identify the respective session, and/or a session pass-phrase (e.g. a session key) to encrypt or decrypt the data with respect to the session. In various examples, the session identifier and the session key may be shared between the communication entities (e.g. nodes) that are configured to exchange data with respect to the session.

As denoted, communication devices illustrated herein may include two radio units to transmit and/or receive radio communication signals via separate established physical links simultaneously. For example, in Wi-Fi context, the communication interface may include a dual band Wi-Fi module, illustratively including two radio units for two frequency bands (e.g. 2.4 GHz and 5 GHz). The communication interface 503 including a first communication module that is depicted as a first radio unit configured to perform radio communication operations within a first frequency band, a second radio unit configured to perform radio communication operations within a second frequency band. The measurement circuit 504 may be coupled to both of the radio units, or each radio unit may be associated with distinct measurement circuit configured as described for the measurement circuit 504 for different communication paths. The apparatus 500 may further include an antenna 505. Although the antenna 505 is depicted as single antennas, in this illustrative example, the antenna 505 includes a plurality of antennas (i.e. at least two antennas, one for each radio unit).

In order to communicate with other communication devices (i.e., other client devices, other user devices) on the network and the internet, assigning an internet protocol (IP) address to the first radio unit and the second radio unit may be necessary. The IP address assignment process may involve obtaining an IP address for the corresponding radio unit through a protocol, such as Dynamic Host Configuration Protocol (DHCP), or configuring a static IP address. In some aspects, the IP address of the first radio unit may be different than the IP address of the second radio unit.

It is to be noted that traditionally two separate radio units within the WLAN context may be associated with one processing chain for processing of the network protocol stack, and thereby although presence of two separate units, both radio units are associated with a single IP address. In accordance with various aspects described herein, the processor 501 may be configured to route data, which is illustratively separated into a-non secure data (i.e. data for non-secure connection) and a secure data (i.e. data for secure connection), into two processing chains at least at a layer above MAC layer of the network protocol stack, and illustratively at or before the network layer of the network protocol stack.

In accordance with various aspects of the disclosure, the first radio unit may communicate, via a secure connection (e.g., VPN connection), established between the communication device and a further communication device. The further communication device may be another type of communication device, or may be a device capable of establishing wireless connection with other devices in the network according to IEEE 802.11 standards. Exemplary, the second radio unit may communicate, via a non-secure connection, established between the communication device and a further communication device.

In this illustrative example, the communication interface 503 may communicate with the same further communication device through both of the first radio unit and the second radio unit. In some examples, they may be different further communication devices, in which the further communication device communicating with the second radio unit may be referred to as another communication device. The another communication device may be another type of communication device, or may be a device capable of establishing wireless connection with other devices in the network according to IEEE 802.11 standards. The assignment of radio units to establish secure or non-secure connections is a non-limiting example as there may be other variations (e.g. in which the second radio unit may be used for establishing a secure connection and the first radio unit may be used for establishing a non-secure connection).

Through aspects described in this disclosure, the apparatus 500 may allow the communication device to connect to the same access point (AP) or different APs simultaneously. In that sense, the first radio unit and the second radio unit may be in operation in an independent manner so that a secure connection and a non-secure connection may be maintained at the same time. As denoted, the secure connection may refer to a connection established through VPN, whereas the non-secure connection may refer to a connection not using VPN.

In some aspects, the processor 501 may determine whether to establish the secure connection or the non-secure connection based on a hierarchical approach. The processor 501 may access a non-transitory storage medium or the memory 502 at which information, instructions and/or program codes are stored to determine whether an invoked application requires a secure connection. The invoked application may refer to any application layer software being executed by the processor 501 or an application layer software for which the processor 501 has received an instruction for execution of the application layer software.

The application layer software may generate or receive application data from an application layer of a network protocol stack, which the application data is to be transmitted or has been received from another communication device via the corresponding network protocol stack. In case the processor 501 determines that the application is configured for and/or requires the secure connection, the processor may map the connection to the first radio unit indicating that the secure connection is established. In case the processor 501 determines that the application does not require and/or works over the secure connection, the processor may map the connection to the second Wi-Fi module indicating the non-secure connection is established.

Illustratively, the processor 501 may determine for data and/or data packet including application data received from one application layer software in an environment in which multiple application layer software are present, the processor 501 may determine a result indicative of whether the data and/or the data packet including the application data of the corresponding application is to be transmitted via a secure connection or a non-secure connection. Based on the determined result, the processor 501 may route the corresponding data and/or data packet including the corresponding application data for either the secure connection or the non-secure connection. For this purpose, the processor 501 may instruct corresponding processing functions of the processor 501 (e.g. network layer) associated with processing of the network protocol stack either for transmission with a first radio unit associated with the secure connection or for transmission with a second radio unit associated with the non-secure connection.

In accordance with various aspects provided herein, the application layer software may indicate whether it requires secure connection and/or non-secure connection. In some examples, processor 501 may receive the indication for each application data provided by the application layer software for transmission. In some examples, the memory 502 may store application layer software information representative of whether an application layer software is configured to a secure connection or a non-secure connection for each application layer software.

In accordance with various aspects provided herein, the processor 501 may determine to map transmission of application data via the first radio unit associated with the secure connection or the second radio unit associated with the non-secure connection based on the application layer software information. The processor 501 may access the stored information to determine whether to establish the secure connection using the first radio unit, or the non-secure connection using the second radio unit.

In accordance with various aspects provided herein, the application layer software information stored in the memory 502 may have been stored in accordance with previous operations of the application layer software. Illustratively, whether an application layer software has previously communicated using a non-secure connection or a secure connection. For example, the processor 501 may determine that the application layer software uses the same type of connection (i.e. secure or non-secure) as previously used.

In accordance with various aspects provided herein, the processor 501 may determine whether application data is to be routed for a secure connection or a non-secure connection dynamically based on parameters of a logical link and/or a session established for transmission of the application data. In particular, if the application data is provided for a transmission to a further communication device of an established D2D connection, and/or a further communication device of within the same network, and optionally within a designated proximity to the communication device including the apparatus 500, the processor 501 may determine that the application data is routed for the non-secure connection. Otherwise, illustratively if the application data is provided for a transmission to a communication through an AP into another wireless communication network or into WWAN, the processor 501 may determine that the application data is routed for the secure connection.

Aspects associated with determination of whether application data is to be routed for a secure connection or a non-secure connection dynamically may be implemented as described below. In particular, the processor 501 may determine whether data and/or data packets including an application data of an application based on a location of a target communication device, which the target communication device is the communication device which is to receive the data and/or data packets including the application data of the application.

In some aspects, the processor 501 may determine whether to establish a secure connection or a non-secure connection with a target communication device based on a location of the target communication device. Illustratively, the location of the target communication device may include a location that is relative to the communication device including the apparatus 500, illustratively a proximity to the further communication device. In some examples, the target communication device may be another terminal device of the radio communication network, and an established connection may be a D2D connection.

The term proximity here may refer to a distance, which may be a determined distance via an estimation, a prediction, a measurement, a received distance information, to the target communication device. To determine the proximity of the peer device, the processor 501 may scan for a service set identifier (SSID) or a basic service set identifier (BSSID) of the target communication device. Illustratively, the processor 501 may determine the SSID or the BSSID that is associated with the target communication device via exchanging messages with the target communication device in case of an established connection. Additionally, or alternatively, the processor 501 may scan for received radio communication signals to identify signals sent by the target communication device. The processor 501 may determine that the target communication device is in the same WLAN network if the SSID of the target communication device is identical to SSID of the communication device including the apparatus 500. In some examples, upon identification that the target communication device and the communication device including the apparatus 500 are members of the same WLAN network, the processor 501 may determine that the target communication device is within a desired proximity to the communication device, and may accordingly route the data and/or data packets including application data to be transmitted to the target communication device via the non-secure connection.

In some examples, the processor 501 may determine an RSSI level of a radio signal received from the target communication device. The processor 501 may obtain the RRSI level of the received signal from the peer device based on the measurements performed by the measurement circuit 404. In other examples, the apparatus 500 may have a standalone measurement circuit coupled to the processor 501 to provide RSSI level of the received signal. The processor 501 may determine a location of the target communication device by determining whether the target communication device is within a designated or desired proximity to the terminal device based on the RSSI level. The processor 501 may compare the RSSI level of the received signal with a predefined threshold exemplary stored in the memory 502. In some aspects, the processor may determine that the target communication device is within a desired proximity and may map the connection to the second radio unit for the non-secure connection. In other aspects, the processor 501 may determine that the target communication device is not within a desired proximity to the communication device including the apparatus 500, and in this case the processor 501 may route the data and/or data packets including the application data to a first radio unit for a transmission over the secure connection.

FIG. 6 shows an example illustrating connections in a network environment including plurality of remote communication devices 610 and local communication devices 620. The communication device 601 including the apparatus 500 may establish a connection with the remote communication devices through an access point (AP) 630. In that case, the processor 501 may establish a first connection to one of remote communication devices 610 using the first radio unit to provide the secure connection. The processor 501 may establish a second connection simultaneously with the first connection with a local communication device 620 using the second radio unit to provide the non-secure connection.

Illustratively, the processor 501 may establish the first physical and logical connections representing a secure connection with another client device such as a server located remotely to the terminal device through the AP 630 over the internet. The first radio unit in this case may indicate that the connection established through the first radio unit is secure. The processor 501 may establish the second physical and logical connections representing the non-secure connection with a local terminal device, such as a mobile phone operating within the same WLAN network. In that case, the second radio unit may indicate that the connection (established through the second radio unit) is non-secure and the connection may not require Internet connection to connect with the local communication device 620 (e.g., using Wi-Fi Direct). It is to be noted that the first physical and logical connections and the second physical and logical connections may occur at the same time providing the terminal device 601 to communicate using both secure and non-secure connections through the first and the second radio units having distinct IP addresses at the same time. In some aspects, the first radio unit and the second radio unit may use different frequency bands. Illustratively, the first radio unit may use 5 GHz frequency band the second Wi-Fi module may use 2.4 GHz frequency band according to IEEE 802.11 communication protocol.

Illustratively, an application executed by the processor 501 of the communication device 601 may provide a seamless file transfer between the communication device 601 (e.g., a computer, laptop, etc.) and the local communication device 620 (e.g., a smartphone). In that case, the processor 501 may determine that the local communication device 620 is in proximity based on the RSSI level and the application does not require and/or work over a secure connection such as VPN. In this case, the processor 501 may determine to establish a physical connection between the devices (i.e., between the communication device 601 and the local communication device 620) via the second radio unit designated to provide non-secure connection. In that sense, the non-secure connection via the second radio unit may be established for short range D2D communication in which the data is transmitted through the non-secure channel, whereas the secure connection via the first radio unit may be established to provide a connection over the AP 630 that inherently requires Internet connection in which the data is transmitted through the secure channel. "

Accordingly, the processor 501 may route data and/or data packets including application data of various applications as illustratively described herein for a transmission with the first radio unit for secure connection or for a transmission with the second radio unit for non-secure connection.

In some examples, if the application does not require and/or work over a secure connection, the processor 501 may determine to establish a non-secure connection in an automatic manner without needing to check whether the SSIDs are matched. In those cases, the processor 501 may establish the connection using the second radio unit without evaluating further criteria. Such determination may facilitate which type of connection (i.e., the secure and the non-secure) may be established and which Wi-Fi module (i.e., the first and the second Wi-Fi module) may be assigned for the connection in order to improve user experience (e.g., user of the terminal device).

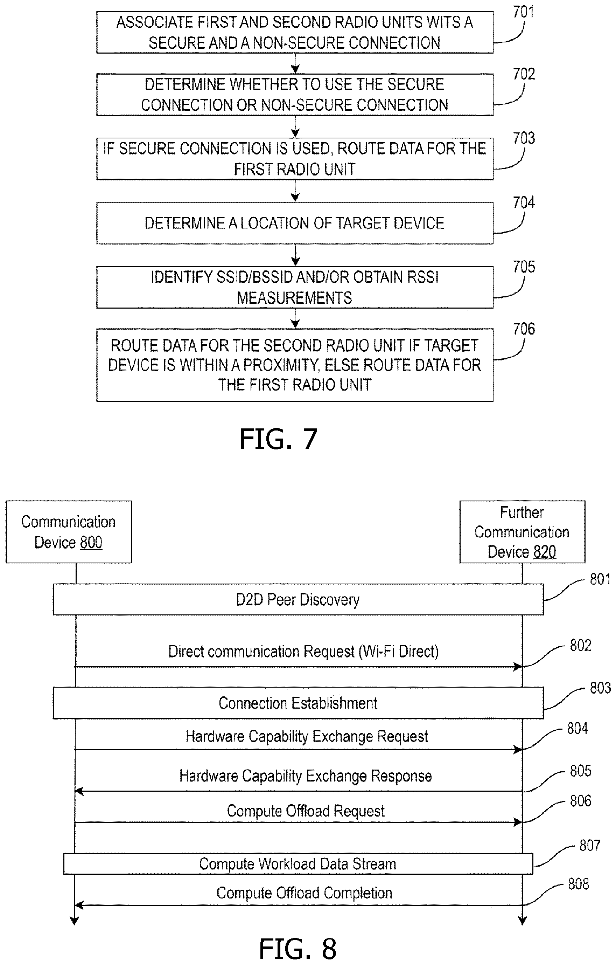

FIG. 7 shows an example of a flow diagram, according to which the processor 501 may perform operations. In 701 the processor 501 may select one of the radio units of the communication device 601 as the first radio unit for secure connections and another one of the radio units of the communication device 601 as the second radio unit for non-secure connections. The processor 501 may perform operations, which may include configuring radio units (i.e. baseband and/or protocol processing chains, RF chains, etc.). The processor 501 may further establish physical and logical connections for transmission of data in accordance with current operations (i.e. communication operations, logical connections for applications, sessions, etc.).

In 702, the processor 501 may, for data instructed for a transmission, which the data includes application data of an application, determine whether the data is transmitted via the secure connection or via the non-secure connection based on application layer information stored in the memory 502 or based on an instruction received from the application, which may either indicate a use of the secure connection or a use of the non-secure connection to transmit the data.

In 703, if the processor 501 determines to use the secure connection, the processor 501 may route the data for a transmission with the first radio unit. The processor 501 may perform operations associated with further layers of the network protocol stack, and encode the data for the transmission with the first radio unit. Illustratively, first antennas of the first radio unit may transmit radio communication signals carrying the data. Alternatively, if the processor 501 determines to use the non-secure connection, the processor 501 may route the data for a transmission with the second radio unit. The processor 501 may perform operations associated with further layers of the network protocol stack, and encode the data for the transmission with the second radio unit. Illustratively, second antennas of the second radio unit may transmit radio communication signals carrying the data.

704-706 may be an optional operation, exemplarily executed in case the processor 501 cannot determine whether the data is to be transmitted with the secure connection or the non-secure connection. Reasons for this may include that there may be no application software layer information stored for the corresponding data scheduled for transmission and/or the application layer software may not indicate a particular preference for secure or non-secure connection. In this example, the processor 501 may determine a location of the target communication device 620 in 70. Location determination may include an estimation of a distance between the target communication device 620 and the communication device 601.

In 705 the processor 501 may further identify SSID and/or BSSID which the target communication device 620 is associated to and the processor 501 may further perform RSSI measurements to identify RSSI values. In 706, the processor 501 may route the data for a transmission with the second radio unit, as described above, if the target communication device 620 device is within a designated proximity, illustratively in case the target communication device and the communication device 601 are the member of the same SSID and/or BSSID, and measured RSSI values are above a designated threshold. Otherwise, the processor 501 may route the data for a transmission with the first radio unit, as described above.

Radio communication networks may include a plurality of communication devices linked through wireless connections for data exchange as described in this disclosure. In accordance with various aspects provided in this disclosure, certain devices may possess computing resources capable of executing remote computational tasks within such networks. These computing resources can illustratively include CPUs to designated specialized hardware accelerators. For example, when a device encounters a computing task beyond its processing capacity, or when a communication device determines, for various reasons such as authorization, power conservation, prioritizations, it may determine to offload this computing task to other available computing resources within the network.

In accordance with various aspects described herein, an offloading of a computing task may occur through established D2D (Device-to-Device) connections between two communication devices. Once a D2D link is established between two peer devices, one device with a computing task can identify the presence of potentially more capable, or more available, computing resources on the peer device. In accordance with various aspects described herein this identification may occur through protocols or communication standards enabling devices to exchange information about their available computing resources.

In accordance with various aspects described herein, upon recognizing the need for additional processing power or specific computing capabilities, the communication device may, to initiate an offload of a computing task, send a request to the peer device to utilize available computing resources of the peer device. In some examples, this request may include information representative of details about the computing task and the requirements for offloading. The peer device may evaluate its own available computing resources and may decide whether to accept the offloading request.

Illustratively, upon acceptance of the peer device, the peer device may begin executing the computing task using its available resources. The peer device may generate certain results as an output of the computing task. The peer device may accordingly transmit the results back to the initiating device over the D2D link. Throughout this process, communication between the communication devices may remain a vital element to coordinate the offloading, ensure data integrity, and manage the computational aspects efficiently.

Thereby, it is to be noted that the success and efficiency of an offloading mechanism, illustratively described above, may heavily rely on the communication between devices, the compatibility of computing resources with the designated computing task, and the protocols governing this exchange. Moreover, the decision-making process regarding task offloading might not always consider the full spectrum of available computing resources or the specific capabilities of the peer device, which may potentially impact the overall effectiveness of the offloading process.

In accordance with various aspects described herein, the communication device (e.g. the communication device including the apparatus 500) may be an initiating device for an offloading operation. For example, the computing device may be including a low-end computing device, which may refer to a computing device which lacks dedicated hardware accelerators as exemplified to perform high-demanding tasks such as gaming or executing a complex AI/MI, model (e.g., a convolutional neural network). The phrase may, additionally or alternatively, refer to a communication device which entirely relies on the capabilities of its processing means, such as its CPU, to perform various functions and/or tasks.

A typical example associated with the remote computing and/or remote processing may include the use of cloud computing systems. Cloud computing may be a decent option for the high-demanding tasks that the initiating devices may fail to execute in a time-efficient manner. The communication device may alternatively completely fail to carry out the tasks due to the limited hardware resources. Those cases are to be taken as non-limiting examples and other scenarios may also be possible within the context of low-end terminal devices in which the device lacks adequate hardware resources to perform a certain task thereby requiring a cloud computing service.

However, there are various constraints associated with the use of cloud computing, such as network latency, network reliability, and/or available bandwidth. In some cases, the communication between an initiating device and the cloud system may be compromised, allowing an adversary to intervene in the communication and perturbate the data transmitted from the cloud system to the low-end terminal device. In another example, data transmission (e.g., transmission of output data of a high-demanding task) may result in packet loss due to network issues. Furthermore, some types of communication devices may be designated to provide use cases for relatively simpler tasks, such as web browsing and video streaming. These devices, such as tablets may be expected to stumble when using cloud computing solutions due to their designed configurations regarding connectivity speed, network interface, and the like. Those examples are to be taken as non-limiting as other scenarios may be realized in which the data transmission and reception between a communication device and the cloud system suffer from variable issues.

To overcome such issues, a framework of wireless D2D communication may be used for data and computation offloading to nearby peer devices, solving the problems that may occur when leveraging cloud computing. In accordance with various aspects provided herein, an initiating device and the peer device may perform various operations for obtaining hardware capability information of a nearby peer device, for which a computing task may be offloaded.

Illustratively, a hardware capability may refer to specifications and availability of various types of a hardware of the nearby peer device including an integrated graphics processing unit (iGPU) and/or discrete graphics processing unit (dGPU), neural processing unit (NPU), graphics media accelerator (GMA), image processing unit (IPU), a vision processing unit (VPU), a gaussian and neural accelerator (GNA), and associated information for the respective hardware, in particular whether those entities are present within the nearby peer device. Obtaining such information prior to determining to initiate offloading may make the determination (e.g., an offloading decision) data driven. The data driven determination may refer to or include an offloading decision by evaluating which device and/or platform may be suitable for the execution of a computing task or an application. The devices/platforms that may perform the execution of the computing task and/or the application may include the communication device (e.g. the communication device including the apparatus 500), the nearby peer device, or a cloud computing system.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

In particular, the apparatus (e.g. the processor 501 and the communication interface 503) may be configured to perform D2D communication operations in accordance with various radio communication technologies. Illustratively, the processor 501 and the communication interface 503 may perform communication operations according to the BT communication protocol, as described above, to perform D2D communication operations, and/or the processor 501 and the communication interface 503 may perform communication operations according to the IEEE802.11 communication protocol, as described above, to perform Wi-Fi Direct communication operations, and/or the processor 501 and the communication interface 503 may perform communication operations according to the LTE or 5G/NR communication protocol, as described above, to perform D2D communication operations.

A computing task may be, or may be included by, a workload associated with any specific operation, process, or set of calculations that a device or system needs to perform using computational resources. Illustratively these tasks may range from simple arithmetic calculations to complex operations. In other words, a computing task may include any action or sequence of actions that require the use of a device's processing capabilities to achieve a designated objective or outcome.

Illustratively, a computing task may include an image processing task, such as image recognition or complex image manipulations. Illustratively, these tasks may involve intensive computational algorithms that can be offloaded to devices equipped with specialized image processing units or GPUs, allowing for quicker and more accurate analysis. A computing task may include video encoding and/or decoding task. Decoding high-resolution videos in real-time can be challenging, and offloading this task to a device with dedicated video decoding hardware or better processing capabilities may ensure smoother playback without lags or buffering.

Further, a computing task may include machine learning inference tasks. Illustratively, running machine learning models for tasks like natural language processing or object recognition can demand substantial computational power. Offloading these inference tasks to devices with dedicated AI accelerators or GPUs can expedite processing and enhance the accuracy of predictions. A computing task may include cryptographic operations, including encryption and/or decryption processes to secure data transmissions, which can be resource intensive. Devices with cryptographic co-processors can efficiently handle these operations, allowing for offloading such tasks and ensuring secure communications.

Furthermore, a computing task may include 3D Rendering, as rendering 3D graphics or models can strain low-end devices due to the complexity of calculations involved. Offloading this task to a device with a dedicated graphics card or rendering capabilities can significantly speed up the process and improve visual quality. A computing task may include real-time data analytics as analyzing extensive datasets in real-time, especially in scenarios like IoT devices collecting sensor data, can overwhelm basic computing resources. Offloading data analytics tasks to devices with more powerful CPUs or dedicated analytics hardware can facilitate quicker insights.

Moreover, a computing task may include audio processing tasks, as tasks like noise cancellation, speech recognition, or audio synthesis may require significant computational resources. Offloading these tasks to devices with specialized audio processing units can enhance the accuracy and efficiency of audio-related applications. It is to be noted that these examples are provided herein illustratively, in particular, to show that various computing tasks may be particularly suitable for various types of computing resources. In accordance with various aspects described herein, learning available computing resources of the peer device may particularly be important to determine which computing tasks are suitable for an offload operation to the peer device.

Accordingly, hardware capability information may include information representative of available computing resources for remote processing of computing tasks. Illustratively, hardware capability information may include hardware capabilities of the corresponding device generating hardware capability information for remote computing. Illustratively, hardware capability information may include a type of the processor and a speed of the processor. Hardware capability information may further include a type of dedicated graphics units or cores. Hardware capability information may include an amount and speed of random access memory and/or details about specialized hardware, like NPUs, VPUs, tensor processing units (TPUs) and their capabilities. Hardware capability information may include available storage capacity, or information about network capabilities, such as WWAN availability, bandwidth, etc. In some examples, hardware capability information may include information about supported application programming interface (API) and/or software frameworks. In various examples, hardware capability information may include an indication whether there are available computing resources, and/or when such computing resources are available.

As denoted, obtaining hardware capability information from the nearby peer device may facilitate a determination of an offload of computing tasks. Additionally, a framework may include the transmission of the available hardware resources of the low-end terminal device for the computation task to the nearby peer device. Therefore, the low-end terminal device may obtain the hardware capabilities of the peer device to determine whether the workload may be executed in the terminal device or offloaded to the nearby peer device based on the received capability information.

In accordance with various aspects of the disclosure an apparatus may be provided to various tasks and perform various functions. The apparatus may include a processor, such as the processor 501 or a processor that incorporates the features and capabilities of the processor 501. The processor may be coupled to a memory storing instructions, logic or program codes, the processor may initiate a flow sequence in-between the low-end terminal device and the user device in which the sequence may be initiated after a secure wireless connection is established between the low-end terminal device and the nearby peer device.

FIG. 8 illustrates an example of a communication flow diagram in accordance with various aspects provided herein. The communication flow is between a communication device 800 (e.g. a communication device including the apparatus 500; the communication device 601) and a further communication device 820. Illustratively, the communication device 800 may be an initiating device that may offload a computing task, and the further communication device may be a communication device including hardware configured to perform processing of computing tasks provided remotely by other devices, illustratively as described above.

In 801, the communication device 800 and the further communication device 820 may perform D2D peer discovery procedure to discover each other. The processor 501 and/or the communication interface 503 may perform the discovery procedure in accordance with a communication protocol for D2D communication. Illustratively, the processor 501 may initiate a scanning procedure, in which the communication interface 503 may receive radio communication signals including advertisement packets or beacons of further communication devices including the further communication device 820. Alternatively, the processor 501 may encode advertisement packets or beacons to advertise its presence to further communication devices through transmission signals through the RF interface. The transmission signals may include characteristics of communication device 800 such as device identity, device capabilities, device services, and the like.

Upon completion of the discovery, the communication device 800 and the further communication device may perform operations to establish connection with its discovered peer. The communication device 800 may receive advertisement packets from the further communication device 820, and the processor 501 may decode received advertisement packets to discover the further communication device 820. Accordingly, as illustrated herein in 802, the processor 501 may encode a D2D communication request for a transmission to the further communication device 820. The further communication device 820 may accept the request and both communication devices may perform operations to have an established D2D connection in between. Optionally in 803, the communication device 800 and the further communication device 820 may perform operations to authenticate each other and establish a security in-between.

In 804, the processor 501 may encode a request of hardware capability information for a transmission to the further communication device 820. In response to a transmitted request of hardware capability information, in 805, the communication device 800 may receive a hardware capability exchange response from the further communication device 820. The processor 501 may decode a capability exchange response information from the further communication device 820, which may include information representative of available computing resources of the further communication device, which are configured to perform processing of remote computing tasks. Illustratively, the decoded capability exchange response information may include hardware capability information of the further communication device.

It is to be noted that the communication device 800 may perform above-mentioned operations obtain hardware capability information of a plurality of further communication devices including the further communication device 820. Accordingly, the processor 501 may obtain multiple hardware capability information of multiple further communication devices to determine offloading different computing tasks to different further communication devices, as described in this disclosure.

The processor 501 may accordingly determine whether a computing task is to be offloaded to the further communication device 820 based on the hardware capability information of the further communication device 820. For example, the processor 501 may accordingly determine whether a corresponding task is to be offloaded to a corresponding further communication device of multiple further communication devices based on the hardware capability information of the corresponding further communication device and/or multiple communication devices.

The processor 501 may determine a computing task to be offloaded to a further communication device (e.g. the further communication device 820) in various manners. Illustratively, the processor 501 may simply offload a computing task to a further communication device when a further communication device is capable of performing the computing task. In some examples, the processor 501 may determine a computing to be offloaded to a further communication device based on further information representative of characteristics of the computing task and/or the execution environment designated for the computing task.

Illustratively, the further information representative of characteristics of the computing task described herein may include at least one of: input data size representing the volume of data to be processed; a designated computational complexity of the computing task; input data structure, real-time requirements (e.g. latency and responsiveness requirements); output data size and/or format; and/or algorithmic dependencies which may include designated dependencies on external libraries, software versions, or specialized APIs. Illustratively, the further information representative of characteristics of the execution environment may include information provided by the hardware capability information received from the further communication device 820, as described in this disclosure.

In 806, the processor 501 may encode a compute offload request indicative of a request to offload a determined computing task. The compute offload request may include information related to the determined computing task, for example information about characteristics of the computing task as described above. The request may further include an indication of a selected computing resource. For example, the compute offload request may include metadata about the computing task and specific hardware capability of the further communication device 820 to be used. In this request, the processor 501 may encode all parameters that are required by the further communication device, and further information about in which computing resource is the computing task to be executed efficiently.

In 807, the communication device 800 and the further communication device 820 may stream each other data about computing tasks. Illustratively, the processor 501 may encode input data for the computing task, which the corresponding computing resource of the further communication device processes to obtain processing results (i.e. output data), and the processor 501 may decode data received from the further communication device 820 to obtain the results.

For example, to determine whether the communication device 800 offloads to the nearby peer device 820, the processor 501 may execute a program code stored exemplary in the memory 502. The program code may make use of a plurality of received or stored parameters. The processor 502 may execute the program code to generate a result representing a determination of offloading to the nearby peer device. In some aspects, the processor 501 may determine to offload the workload to the nearby peer device based on the output. In some examples, the processor may determine not to offload based on the output and instead the workload may be executed locally.

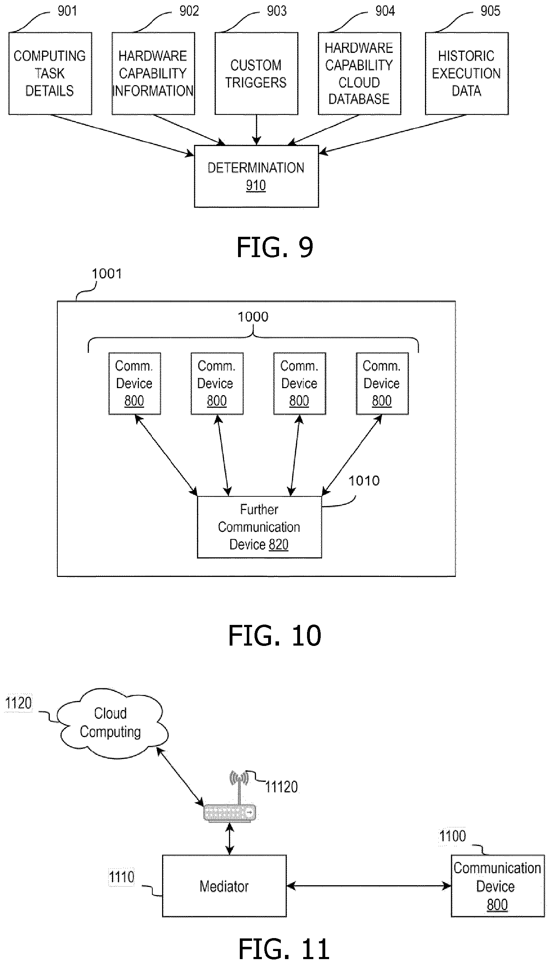

FIG. 9 shows an example of an illustrative diagram for a determination of a computing task to be offloaded to the further communication device 920. It has been illustrated herein as an example, based on what kind of information the processor 501 may determine a computing task to be offloaded to a further communication device, illustratively to the further communication device 520.

In some examples, a determination of a computing task to be offloaded to a further communication device may include a selection of a computing task from multiple computing tasks offloadable by the communication device 900 to a further communication device. In some examples, the determination may additionally or alternatively include a selection of a further communication device from a plurality of further communication devices.

In some examples, the processor 501 may determine a computing task to be offloaded to the further communication device based on computing task details information 901 representative of information defining a respective task, workload or application program interface (API) to be executed. The computing task details information 901 may include details about the workload such as the data size, data format, data type, etc. The computing task details information 901 may further include execution environment-related data in which the workload can be executed. In that sense, execution environment-related data may refer to suitable execution environments for executing the workload. Illustratively, the computing task details information 901 may be stored in the memory 502. In a sense, the computing task details information 901 may include predefined and predetermined information by the communication device 800.

In some examples, the processor 501 may determine a computing task to be offloaded to the further communication device based on hardware capability information 902 received from one or more further communication devices, illustratively from the further communication device 820 as shown in FIG. 8. It is to be noted that although FIG. 8 shows a flow diagram in which hardware capability information 902 is received from a single nearby peer device, the hardware capability information 902 may be received from a plurality of devices during the scanning process initiated by the communication device 900 by sending requests to those devices and receiving information in return. The hardware capability information 902 may be in the form of tabular data or vectorized data representing low level details of hardware capabilities and accelerator information available within the nearby peer devices, some of which have been described above. The hardware capability information may be stored in the memory 502. The hardware capability information 902 may also include status information whether there is an active connection between the communication device 800 and the corresponding further communication device.

In some examples, the processor 501 may determine a computing task to be offloaded to the further communication device based on custom trigger information 903 defined by Original Design Manufacturer (ODM), Original Equipment Manufacturer (OEM) or platform vendors. The custom trigger information 903 may include CPU/GPU throttling thresholds for the respective hardware and/or accelerator within the further communication device, a platform temperature threshold, battery level, and the like to assist the determination of offloading to the peer device (i.e., the nearby peer device). Illustratively, the temperature threshold of an accelerator available within the peer device may be inadequately low to execute a specific workload. In that case, this parameter may affect the output and cause the processor to determine not to offload. In a sense, the custom trigger information 903 may include predefined and predetermined information by the communication device 800 and/or above-described information received from the further communication device as a part of hardware capability information.

In some examples, the processor 501 may determine a computing task to be offloaded to the further communication device based on hardware capability data 904 representing a data in an external database storing up-to-date information about different hardware capabilities and nature of computing tasks that may be executed efficiently using the corresponding hardware. The phrase "nature of computing tasks" may refer to the type of the computing task, such as an AI/MI, application, an educational application requiring image processing, etc. In that sense, the database may maintain computing task type(s) and suitable hardware(s) for executing those computing tasks in an efficient manner. Efficiency herein may be a function of time indicating the execution is completed within a predefined time period, preventing latency to obtain the output.

In some examples, the processor 501 may determine a computing task to be offloaded to the further communication device based on historic execution data 905 representing the execution time of tasks/workloads that can be offloaded when they are executed locally (on the terminal device itself), on a cloud computing system, or on a certain peer device. Historic execution data 905, in that sense, may be stored in the memory 502 and may provide information whether the workload may be executed faster when offloaded. In that case, this parameter may affect the output generated by the processor 501 by executing the program code, causing the processor to offload. Historic execution data 905 may further include an execution cost of a certain workload when offloaded to the cloud computing system. The execution cost may exemplarily include bandwidth and latency associated with transmitting to and/or receiving data from the cloud computing system.

In some examples, the processor 501 may generate an output, based on the inputs (i.e., the parameters), including a selection of a further communication device for offloading the corresponding task. In some examples, the processor 501 may generate an output, based on at least one of the inputs as described above, representing a determination to offload the computing task to the further communication device. In some examples, the processor may 501 generate an output, based on the inputs, leading to a determination not to offload the computing task to the further communication device and execute the workload locally. In some aspects, the processor 501 may generate an output, based on the inputs, leading to a determination for offloading the computing task to a cloud computing system. In some aspects, the processor 501 may generate an output, based on the inputs, leading to a determination for offloading the computing task partially or offloading a first computing task of a workload to the further communication device, while the processor 501 may process a second computing task of the workload by itself and/or the processor 501 may perform above-mentioned operations to offload the second computing task to a further communication device that is different from the communication device, to which the first computing task is to be offloaded. In that case, a part of the workload may be executed locally and another part of the workload may be offloaded to the peer device. In some examples, a weight may be assigned to inputs so that the processor 501 may perform offloading decisions based on the output derived from the weighted inputs.

FIG. 10 illustrates an example of a use case including offloading of a computing task. The use case may be for a classroom environment 1001 where an instructor and students use their own communication devices. In that case, the communication devices used by students are more inclined to be low-cost and accordingly have low hardware capability. Those devices may be an example of the communication devices 800 as described herein. As denoted low-end terminal devices 1000 may not be equipped with hardware capabilities that a high-end terminal device 1010 has. Hardware capabilities may include processors such as CPUs with higher processing power, more memory such as more random access memory (RAM) and specific hardware accelerators like iGPU/dGPU, NPU, GMA, IPU, VPU, GNA. On the other hand, the terminal devices used by the instructors may be high-end terminal devices 1010. In such scenario, the apparatus 500 of low-end terminal devices 1000 may initiate the procedure depicted in FIG.7 to establish a secure D2D communication to leverage hardware resources of the high-end terminal device. As the nature of the tasks may be similar for students, the low-end terminal devices 1000 may also exchange the metadata of the tasks to facilitate the execution of the corresponding workload.

Another use case may include a home and/or office environment in which the low-end terminal device may initiate the procedure depicted in FIG. 8. Exemplary, a low-end terminal device as illustrated the communication device 800 in an office may make use of hardware resource capabilities of a high-end terminal device 1010 using hardware capability information exchange mechanism.

In some aspects, the communication device 800 may access a cloud service to utilize resources provided by the cloud service for offloading a certain task. However, the communication device 800 may be in a low coverage area due to exemplary strength of the signal transmitted by a wireless AP (e.g. a router) is not adequate or due to the terminal device being placed in an environment that has physical obstacles with the environment the wireless AP is placed. Being in a low-coverage area may severely affect the network connection established by the terminal device and thus quality of experience (QoE) may degrade when using the cloud service.

FIG. 11 shows an illustrative example of including a mediator for cloud computing. The terminal device 1100 including the communication device 800 may initiate scanning process to discover nearby further communication devices. Using the hardware capability information exchange scheme shown in FIG.6, the processor 501 may identify a further communication device 1110 having a better network connectivity indicating exemplary a closer position to a network access node, illustrated as an AP 1130, with a better signal quality to communicate with the AP 1130, etc. The processor 501 may send a communication request to establish a wireless secure D2D communication with the peer device 1110 to facilitate the access to cloud service 1120 via the peer device. In that scenario, the peer device 1110 may act as an intermediary device having dual connectivity features so that the peer device 1110 may maintain connection with the cloud service 1120 and the terminal device 1100 simultaneously.

In accordance with the various aspects described herein, an apparatus and method may be provided for maintaining quality of service (QoS) for the terminal device in a radio communication network including RAN, minimizing carbon footprint and carbon emissions at the RAN and reducing overall power consumption to save operational expenditure (OPEX). Solutions put forward in the art cover carbon footprint reduction mechanisms by switching the network access nodes from operating (i.e., ON) state to non-operating (i.e., OFF) state in which the network access nodes typically consume energy provided from an electrical grid. Therefore, use of renewable energy, such as solar energy, in the network access nodes may be addressed to deliver a joint consideration of maintaining QoS, minimizing carbon footprint and reducing overall power consumption at the RAN.

Previous approaches aimed at reducing carbon footprint and minimizing OPEX predominantly focused on managing power consumption by toggling cells within a network on and off. Illustratively, depending on network conditions, such as cell load and QoS parameters associated with network traffic and also QoS constraints met by the network, a centralized entity may instruct network access nodes of certain cells to operate in a low power mode or in a turned off mode. However, these strategies operated in these extremities of on/off may neglect the combined potential of integrating solar or renewable energy sources. The oversight lay in their failure to holistically address the tripartite goals of diminishing the carbon footprint, curbing OPEX through reduced power consumption, and preserving Quality of Service (QoS).

The limitations of prior methodologies may also be apparent in their semi-static nature, lacking the capacity to optimize concurrently across solar energy integration, cell activation, and deactivation. These solutions often may be employed through fixed protocols, such as storing solar energy during daylight hours for nighttime use and employing cell on-off mechanisms during the day.

In accordance with various aspects described herein, power management throughout the network may not always impose such rigid constraints, aiming to transcend the sub-optimal outcomes inherent in these static frameworks. On the contrary, through aspects associated with dynamic optimization process involving use of renewable energy resources, which may synchronously address three primary objectives. Through various aspects described herein, a central entity of the network may, by engaging in real-time forecasting of the future network environment and evaluating the anticipated availability of renewable energy sources, dynamically optimize solar energy integration, cell on-off strategies, and other variables within the network. This forward-looking approach may allow to harmonize the objectives of reducing carbon footprint, minimizing OPEX, and maintaining QoS by making informed decisions based on predictive analytics and adaptive control mechanisms.

Aspects in this context are to be described by referring to the apparatus 500 described in accordance with FIG. 5. It is to be noted that, although aspects described in this context may be combined and co-exist with further aspects provided in this disclosure, examples provided herein may also be implemented in a communication device only for the aspects described in this context.

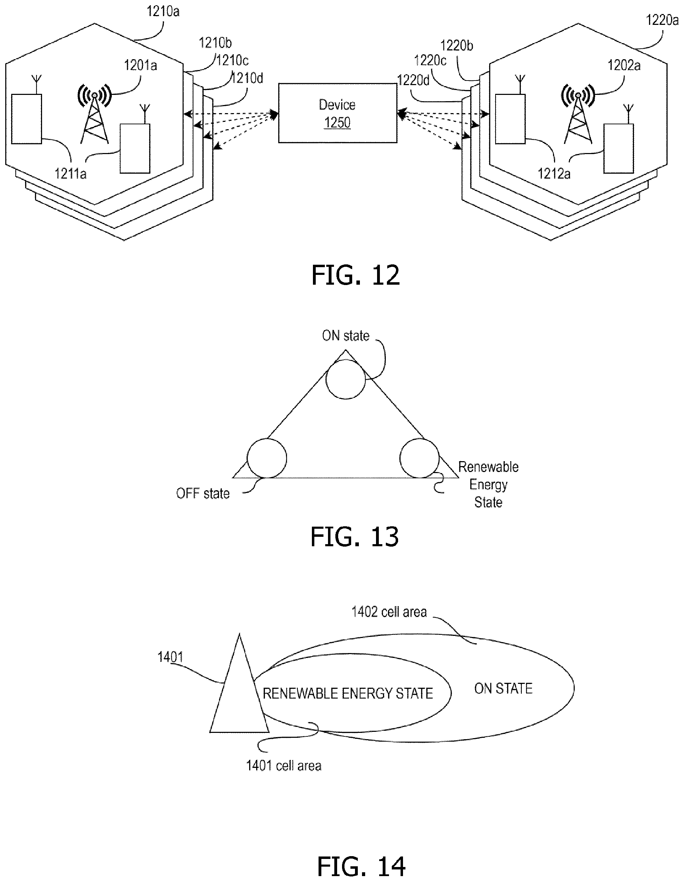

FIG. 12 shows an exemplary illustration of cells of a mobile communication network. A cell may be referred to as a particular geographical region covered by a network access node in which the network access node provides a network access service to terminal devices. The size of a cell may depend on the mobile radio communication technology used by the network access node associated with the cell. For example, within the context of a wireless local area network (WLAN), a cell may have a radius of up to 100 meters, while within the context of cellular communication a cell may have a radius of up to 50 kilometers. It is further to be noted that for a network access node, the larger the coverage region is, more power may be consumed for providing services to more terminal devices illustratively with higher transmit powers.

The mobile communication network may include multiple cells 1210a-d, 1220a-d, each cell being associated a network access node (e.g. network access nodes 110, 120) configured to provide a radio access service to multiple terminal devices (e.g. terminal devices 102, 104). Aspects associated with the radio access service provided by the respective network access node may be represented in relation to the respective cell. In other words, the aspects provided in this disclosure with respect to a cell may also be represented as aspects with respect to the network access node and/or the radio access service provided by the network access node, which the network access node is the entity in the mobile communication network providing network access service for the cell. It is to be noted that the mobile communication network may include many cells associated with many network access nodes. For brevity, the aspects with respect to the cells in the mobile communication network in accordance with FIG. 12 are to be provided from the perspective of a first cell 1210a and a second cell 1220a, which are representative of each cell within the mobile communication network, or which are representative of each cell pair (i.e. any two cells) within the mobile communication network depending on the disclosed aspect.

A first cell 1210a is depicted as it includes a first network access node 1201a, such as a base station, and a second cell 1220a is depicted as it includes a second network access node 1202a. The network access nodes 1201a, 1202a may perform operations associated with the radio access network in order to provide radio coverage over the geographic areas that may be represented by the cells 1210a, 1220a respectively. First group of terminal devices 1211a within the first cell 1201a may access the mobile communication network over the first network access node 1201a, and second group of terminal devices 1212a within the second cell 1202a may access the mobile communication network over the second network access node 1202a. In some aspects, a terminal device may access the mobile communication network over multiple access nodes (e.g. the first network access node 1201a and the second network access node 1202a; not depicted).

A network access node, such as a base station, may provide network access services to terminal devices within a cell. With the recent employment of distributed radio access networks, one or more remote radio units may be deployed for a cell to communicate with terminal devices within the cell using radio communication signals. Accordingly, in this illustration, the depicted network access nodes 1201a, 1202a may include remote radio head units. Such remote radio units may be connected to further controller entities to communicate via wired (e.g. fronthaul) and/or wireless communications, and the controller entities (such as a controller unit, a central unit, a distributed unit) may manage radio resources associated with the one or more radio units within the cell.

The mobile communication network may include a device 1250 including the apparatus 500, as described in this disclosure. The device 1250 may obtain cell-specific parameters and/or RAN-related parameters of the cells 1210a-d, 1220a-d. In some examples, the device 1250 may directly communicate with the network access nodes of the cells 1210a-d, 1220a-d. In some examples, the device 1250 may communicate with one or more intermediate entities of the mobile communication network, which the one or more intermediate entities may provide cell-specific parameters and/or RAN-related parameters of the cells 1210a-d, 1220a-d. The one or more intermediate entities may directly communicate with the network access nodes of the cells 1210a-d, 1220a-d. Alternatively, the one or more intermediate entities may communicate one or more further intermediate entities of the mobile communication network, which the one or more further intermediate entities may directly communicate with the network access nodes of the cells 1210a-d, 1220a-d.

In accordance with various aspects described herein, at least one of the network access nodes of the cells 1210a-d, 1220a-d may be configured to operate in a state, in which the at least one of the network access nodes may consume a renewable energy. Illustratively, such a network access node may be referred to herein as renewable energy network access node. A renewable energy network access node may utilize renewable energy sources through integration of specific hardware and devices configured to uphold their sustainable and efficient operation within the radio access network. For example, a renewable energy network access node may include a renewable energy harvesting system, illustratively including solar panels, wind turbines, or hydroelectric generators, etc. depending on the type of the renewable energy which the renewable energy network access node consumes. These systems may serve as the primary energy source, through capturing and converting renewable resources into usable electrical power, thus reducing dependency on non-renewable fuels.

In some examples, a renewable energy network access node may include energy storage devices, such as high-capacity batteries or energy storage systems (ESS). These storage solutions may maintain a consistent node of operation, via storing surplus renewable energy generated during periods of abundance. Through such energy storage devices, a renewable network access node may ensure to obtain a continuous power supply, even during times of intermittent or low renewable energy availability, thereby enhancing the node's resilience and reliability.

Furthermore, a renewable energy network access node may include an intelligent power management hardware and controllers. An intelligent power management hardware and controllers may include software programs using designated algorithms and control mechanisms that govern energy consumption dynamically. For example, through intelligent power management hardware and controllers, a renewable energy network access node may regulate the activation and deactivation of components based on real-time assessments of renewable energy availability and network demand, optimizing power usage while adhering to Quality of Service (QoS) standards.

RAN-related data of a cell, as defined herein, may include any type of information that is representative of the operation of the radio access network service provided by the network access node of the cell. The RAN-related data may include information representative of the performance or the resource utilization of the radio access network within the cell. In some aspects, RAN-related data of a cell may include information representative of a load of the cell. The load of the cell may include information representing level of activity or the amount of traffic being handled by the corresponding cell as a measure of the utilization or demand placed on that particular cell at a given time. In various examples, such RAN-related data may include information representing at least one of: the number of users accessing the cell, the amount of data being transmitted or received, the frequency of calls or connections, and the overall resources being utilized within that cell.

In particular RAN-related data may include information representative of at least one of: spectrum allocation and usage which may include the frequency bands allocated to the cell, and their current usage, which can affect the capacity and interference levels within the cell, such as UE distribution, a number of UEs in an RRC connected state, a number of active UEs, reference signal strength indicator (RSSI) associated with the UEs, reference signal receive power (RSRP) associated with the UEs, CQI summaries of the UEs; UE distribution that may include the spatial distribution and density of user devices within the cell, which can impact resource allocation, signal strength, and user experience; traffic patterns which may include the types and volumes of data traffic within the cell, such as voice, video, and data applications, which can impact network congestion and resource allocation, such as downlink traffic, uplink traffic, physical resource block (PRB) usage, data throughput; and/or mobility patterns that may indicate the movement of users within the cell, including the frequency of handovers, cell reselections, and other mobility events, which can influence network stability and performance.

Furthermore, the RAN-related data of the cell may include RAN telemetry data that may encompass at least one of various performance metrics (radio communication, device computation, energy consumption, etc.), user equipment (UE) data for which the UEs are served by the network access node of the cell, channel quality indicators associated with radio communication channels with the UEs, traffic data within the cell (i.e. data communicated (received or transmitted) by the respective network access node, mobility data, and spectrum usage information. In some aspects, RAN-related data of a cell may include RAN monitoring data that may encompass data gathered from observing and measuring different aspects of the RAN, such as at least one of the radio network performances within the cell, behavior of the UEs served by the respective network access node (UE behavior), patterns of network traffic within the cell, and cell-specific parameters of the cell. In some additional aspect, RAN-related data may include RAN operational data of the cell, which is related to the functioning and performance of the RAN, which the RAN-operational data may encompass at least one of radio access network metrics, UE information of the UEs served by the respective network access node, channel quality indicators (CQIs) of the UEs, traffic and mobility data, spectrum usage, and cell-specific factors. Each example provided herein may be referred to as an attribute of RAN-related data. RAN-related data may also be referred to as RAN data.

In some aspects, RAN-related data of a cell may include information representative of at least one of: one or more network performance metrics including data related to the performance of the RAN, such as throughput, latency, connection success rate, and dropped call rate; UE data that may include information about the terminal devices connected to the respective network access node, including UE capabilities, signal strength, and quality of service (QoS); Channel Quality Indicator (CQI) including a measure of the quality of the radio link between the UE and the respective network access node, which may help to determine the appropriate modulation and coding schemes for data transmission; traffic data that may include information about the types and volumes of data traffic within the cell (i.e. with the network access node), such as voice, video, and data applications, which may impact network congestion and resource allocation; mobility data including data related to the movement of terminal devices connected to the respective network access node, including the frequency of handovers, cell reselections, and other mobility events, which can influence network stability and performance; spectrum usage data including information about the allocation and utilization of frequency bands within the RAN provided by the respective network access node, which can affect capacity and interference levels; and/or cell-specific parameters.

The RAN-related data may include, in particular, key performance metrics (key performance measures, key performance measurements, key performance indicators, collectively to be referred to as "KPMs") including cell-level performance measurements (e.g. performance measurements for gNB) defined in 12GPP specification TS 28.552 (e.g. TS 28.552, version 18.2.0) for 5G networks and TS.32.425 for EPC networks, and their possible adaptation of UE-level or QoS flow-level measurements, and any KPMs defined in O-RAN Working Group 12 Near-Real-time RAN Intelligent Controller E2 Service Model (E2SM) KPM (e.g. O-RAN.WG3.E2SM-KPM-R003-v03.00). It may include measurements of at least one of Throughput, Delay, Data volume, In-session activity time, PDCP drop rate, IP latency, Radio resource utilization, RRC connections related, PDU sessions related, DRBs related, QoS flows related, Mobility management, CQI related, MCS related, PEE related, Distribution of Normally/Abnormally Released Calls, DL Transmitted Data Volume, UL Transmitted Data Volume, Distribution of Percentage of DL Transmitted Data Volume to Incoming Data Volume, Distribution of Percentage of UL Transmitted Data Volume to Incoming Data Volume, Distribution of DL Packet Drop Rate, Distribution of UL Packet Loss Rate, DL Synchronization Signal based Reference Signal Received Power (SS-RSRP), DL Synchronization Signal based Signal to Noise and Interference Ratio (SS-SINR), UL Sounding Reference Signal based Reference Signal Received Power (SRS-RSRP).

Cell-specific parameters of a cell may include any type of information representative of an attribute or a feature associated with the cell, which the attribute or feature influences the performance of the behavior of the cell. Cell-specific parameters may be referred to as "cell configuration", "cell context information" or "cell environment characteristics". In particular the cell-specific parameters may include information representative of environmental conditions associated with the production of a renewable energy, which may be referred to as environmental condition information in this disclosure.

It is to be noted that the production of renewable energy by a renewable energy network access node through its renewable energy harvesting system may be based on various environmental conditions depending on the type of the renewable energy source. The environmental condition information may include any type of information of environmental condition which may affect the production of renewable energy through energy harvesting system of a renewable energy network access node. Illustratively, environmental condition information may include at least one of: a geographic information for an area surrounding the access node; a location of the access node or a cell which the access node serves; weather at the location; cloud cover at the location; a presence of rain at the location; weather temperature at the location.

For example, solar energy production may rely on photovoltaic (PV) panels and is notably influenced by various influencing elements such as sunlight availability and intensity. Further influencing elements may include cloud cover, atmospheric conditions, and geographical location. Cloudy weather or extended periods of overcast skies can diminish solar panel output, reducing energy generation. Similarly, further influencing elements may include the angle and orientation of panels relative to the sun and potential shading from nearby structures or foliage, which can affect their productivity.

For example, wind energy production may be harnessed through turbines, and may be contingent on consistent wind patterns. Influencing elements may include consistency of wind, and wind speeds. However, calm or turbulent weather conditions can hinder their output. Further influencing elements may include extreme weather events like storms or lightning, which can pose operational risks to wind turbines and necessitate shutdowns for safety reasons.

For example, hydroelectric power generation may rely on water flow and elevation differences. Influencing elements such as droughts or seasonal changes may impact river levels, which can impact the production capacity of hydroelectric plants. Additionally, further influencing elements may include alterations in water temperature or quality due to environmental changes, such as pollution or shifts in ecosystems, which can influence the efficiency of these systems.

For example, geothermal energy, as sourced from the Earth's heat, although may be relatively stable but can be impacted by influencing elements such as geological conditions. Further influencing elements may include availability and accessibility of suitable underground reservoirs of hot water or steam, which can influence geothermal power production. Further influencing elements may include geological disturbances, such as seismic activities, could affect these reservoirs and impact geothermal energy output.

Accordingly, in accordance with various aspects provided herein, environmental condition information may include any type of information indicative of any one of influencing elements described above.

In accordance with various aspects provided herein, the processor 501 may determine a renewable energy network access node, which may be a network node that is capable to operate in a state in which the network access node consumes a renewable energy from network access nodes of the cells 1210a-d, 1220a-d. Exemplarily, the processor 501 may determine the renewable energy network access node by exchanging information with the network access nodes. In some examples, the renewable energy network access node may be indicated by an information stored in the memory 502.

In accordance with various aspects provided herein, the processor 501 may select an operating state for the renewable energy network access node from a plurality of operating states, in which the renewable energy network access node operates. A renewable energy network access node may include at least two operating states, illustratively a first state in which the renewable energy network access node produces renewable energy to perform network access node operations. A second state may include a power-off state in which the renewable network access node does not provide a network access service to the respective cell. Additionally, or alternatively, a third state may include a non-renewable energy state in which the renewable network access node consumes non-renewable energy to provide a network access service to the respective cell. In various examples, the renewable energy network access node may include further states associated with the source of energy which the renewable energy network access uses to provide a network access service within the respective cell.

It is to be noted that the operational efficiency of a network access node powered by renewable energy may be tied to the variable nature of environmental conditions. For example, nodes equipped with solar panels for energy generation heavily rely on sunlight intensity and duration. Fluctuations in weather conditions, such as overcast days or seasonal changes, directly influence the node's power production, potentially causing fluctuations in its energy supply. Similarly, nodes utilizing wind turbines may be sensitive to variations in wind speed and consistency. Unpredictable weather patterns or alterations in wind behavior can lead to fluctuations in the node's energy output, impacting its operational stability.

Moreover, nodes utilizing hydroelectric or geothermal sources for renewable energy may face challenges related to environmental fluctuations. Nodes relying on hydroelectric power are impacted by changes in water flow due to factors like rainfall variations or shifts in river levels. Geothermal systems within nodes may be affected by geological factors that might influence the availability and stability of underground heat reservoirs. The adaptability of these network access nodes to cope with the variability in renewable resource availability due to diverse environmental conditions may be particularly important for maintaining consistent and reliable operations within the telecommunications infrastructure.

In other words, due to the nature of renewable energy generation, a renewable energy network access node may provide varying performance in terms of provision of network service into the cell. Illustrative limitations may be particularly associated with the cell load and/or geographic coverage of the network service provided by the renewable energy network access node.

FIG. 13 shows an illustrative example of states of a renewable energy network access node 1301 in accordance with various aspects of the disclosure. For example, the ON state may be a state in which the renewable energy network access node 1301 operates via a constant supply non-renewable energy. The ON state may be advantageous when it comes to network access reliability which in turn indicates a better QoS compared to the OFF and solar states. However, the overall power consumption may be higher and carbon footprint may be elevated when compared to the OFF and solar states. On the other hand, the OFF state may provide a considerable power saving thereby reducing OPEX in comparison to the ON and solar states. Nevertheless, it may lead to QoS degradation which is more unlikely when the network access node 1301 operates in the ON or solar state. The solar state may minimize the carbon footprint and reduce power consumption compared to the ON state in exchange for providing unreliable network connectivity for terminal devices within the cell.

Power consumption in the renewable energy network access node may be a significant consideration for mobile network operators, as it contributes to the OPEX and environmental impact in the form of carbon footprint of the network. Mobile network operators may look for efficient power consumption mechanisms through various means, such as deploying energy-efficient equipment, optimizing network configurations, and implementing advanced technologies like smart energy management systems. Efforts to reduce the power consumption of network access nodes may align with broader industry goals to create more sustainable and environmentally friendly (e.g. reduced carbon footprint) radio communication networks. Therefore, it may be evident that there is a need to determine an optimal operating state for the network access node 1301 based on the priorities of the mobile network operators and other input data.

FIG. 14 illustrates an exemplary illustration of network performances. Illustratively, two geographical zones of collocated renewable energy network access nodes are provided herein. A first network access node 1401 may operate at 2.5 GHz frequency and a second network access node 1402 may operate at 900 MHz frequency. While the first network access node operates in an operating state of a consuming a produced renewable energy and thereby the coverage area of the first network access node 1401 is smaller than the coverage is of the second network access node 1402 which operates in an operating state of a constant supply non-renewable energy. Illustratively, the processor 501 may have determined the respective operating states of the first and second network access nodes 1401, 1402, as provided in this disclosure.

In some examples, the device 1250 may include monitoring hardware and predictive analytics systems together with designated communication to receive environmental condition information, and to continuously track renewable energy generation patterns and assess energy availability. Through predictive modeling, the processor 501 may forecast future energy supply and network demands, enabling preemptive adjustments and informed decision-making to ensure seamless network performance while maximizing the integration of renewable energy sources.

Illustratively, based on environmental condition information of a renewable energy network access node, the processor 501 may predict an availability of the corresponding renewable energy. The prediction may include a prediction of whether the corresponding renewable energy is available to be sourced, and/or a predicted amount of renewable energy that the renewable energy network access node may generate or supply to provide a network service within the cell. In some examples, the processor 501 may select the operating state of the renewable energy network access node based on the predicted availability of the corresponding renewable energy at the renewable energy network access node.

In some examples, the processor 501 may further predict a network condition of the cell to which the renewable energy network access mode provides the network service based on the RAN-related data. Predicted network condition of the cell may include a predicted cell load for the cell. In some examples, the processor 501 may select the operating state of the renewable energy network access node based on the predicted network condition of the cell.

In some examples, the processor 501 may determine a first performance metric associated with quality of service (QoS) provided to the terminal devices within the cell of the renewable energy network access node, which the first performance metric is determined based on the predicted network condition of the cell and the predicted amount of renewable energy. The processor 501 may determine a second performance metric associated with the QoS provided to the terminal devices within the cell of the renewable energy network access node, which the second performance metric is based on the predicted network condition of the cell and predefined performance parameters associated with another operating state, illustratively with the ON operating state.

Illustratively, the first performance metric may be representative of QoS of the terminal devices within the renewable operating state and the second performance metric may be representative of QoS of the terminal devices within the ON operating state. Based on a comparison, illustratively the difference between the first performance metric and the second performance metric, the processor 501 may determine an operating state. For example, if the difference is below a predefined threshold, the processor 501 may determine the operating state as the renewable energy operating state.

In some examples, the processor 501 may decode operator information received from a mobile network operator, which the operator information is representative of a preference of the operator for selection of the operating state. In an illustrative example, the operator information may include information representative the predefined threshold and/or weight parameters to be applied to the first performance metric and/or the second performance metric to determine the operating state.

In accordance with various aspects provided herein, the processor 501 may select the operating state using a trained artificial intelligence and/or machine learning model (AI/ML). The trained AI/ML may be configured to provide output data representative of a selected operating state from the plurality of operating states based on input data comprising the environmental condition information. In some examples, the input data may further include the RAN-related data.

In accordance with various aspects provided herein, the processor 501 may encode information representative of the selected operating state for a transmission to the renewable energy network access node to instruct and/or cause the renewable energy network access node to operate in the selected operating state.

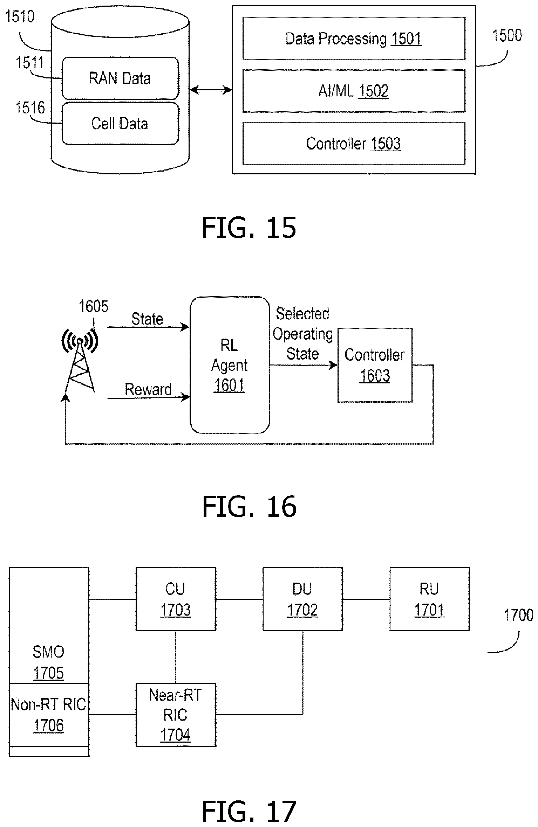

FIG. 15 shows an example of a processor and a memory of a device according to various aspects provided in this disclosure. The processor 1500 is depicted to include various functional units that are configured to provide various functions as disclosed herein, associated with a processor (e.g. the processor 501) that may be used within a device (e.g. the device 1250). The skilled person would recognize that the depicted functional units are provided to explain various operations that the processor 1500 may be configured to perform. Similarly, the memory 1510 is depicted to include the RAN-related data 1511 and the cell data 1512 including the environmental condition information as a block, however, the memory may store the RAN data 1511 and the cell data 1512 in any kind of suitable configuration or mechanism. Furthermore, the AI/ML unit 1502 is depicted as it is implemented in the processor 1500 only as an example, and any type of AI/ML implementation which may include the implementation of the AI/ML in an external processor, such as an accelerator, a graphics processing unit (GPU), a neuromorphic chip, or in a cloud computing device, or in an external communication device may also be possible according to any methods.

The processor 1500 may include a data processing unit 1501 that is configured to process data and obtain at least a portion of the RAN data 1511 and the cell data 1512 as provided in various examples in this disclosure to be stored in the memory 1510. In various examples, the RAN data 1511 and/or the cell data 1512 may include not only current but also past information for at least within a period of time in a plurality of instances of time (e.g. as a time-series data). The RAN data 1511 and/or the cell data 1512 stored in the memory 1510, may include preprocessed data based on received stream of data. In some aspects, the RAN data 1511 and/or the cell data 1512 may be result of a performed feature extraction of the received data. The data processing unit 1501 may be configured to process corresponding data of respective cells received from respective network access nodes (i.e. "Received Data") and form the RAN data 1511 and the cell data 1512.

The data processing unit 1501 may further implement feature extraction operations. It is to be considered that the AI/ML implemented by the AI/ML unit may have certain constraints, some of which may relate to the structure and aspects of the data to be inputted to the AI/ML. The feature extraction operations may include translating (i.e. transforming) the RAN data 1511 and/or the cell data 1512 into input data of the AI/ML. The feature extraction operations may further include generation of training input data for the training dataset based on the RAN data 1511 and/or the cell data 1512. In some aspects, the feature extraction operations may be based on model information representing the attributes to be used as the input of the AI/ML, relative importance or weights of the attributes, etc. The feature extraction operations may include reducing the number of attributes (i.e. data items from the RAN data 1511 and/or the cell data 1512) to be used, ranking of the attributes, etc. based on the model information.

The AI/ML unit 1502 may implement one or more AI/MLs. The aspects are provided for one AI/ML but it may also include applications involving more than one AI/MLs. The AI/ML may be configured to receive input data with certain constraints, features, and formats. Accordingly, the data processing unit 1501 may obtain input data, that is based on the RAN data 1511 and optionally on the cell data 1512, to be provided to the AI/ML to obtain an output of the AI/ML including an information indicative of a selected operating state for the renewable energy network access node. In various examples, the data processing unit 1501 may provide input data including the RAN data 1511 to the AI/ML. The input data may include attributes of the RAN data 1511 associated with a period of time or a plurality of consecutive periods of time. In various examples, the data processing unit 1501 may convert the RAN data 1511 to an input format suitable for the AI/ML (i.e. feature extraction e.g. to input feature vectors) so that the AI/ML may process the RAN data 1511.

The processor 1500 may further include a controller 1503 to control the AI/ML unit 1502. The controller 1503 may provide the input data to the AI/ML, or provide the AI/ML unit 1502 instructions to obtain the output. The controller 1503 may further be configured to perform further operations of the processor 1500 or the device associated with the processor in accordance with various aspects of this disclosure.

The AI/ML may be any type of machine learning model configured to receive the input data and provide an output as provided in this disclosure. The AI/ML may include any type of machine learning model suitable for the purpose. The AI/ML may include a decision tree model or a rule-based model suitable for various aspects provided herein. The AI/ML may include a neural network. The neural network may be any type of artificial neural network. The neural network may include any number of layers, including an input layer to receive the input data, an output layer to provide the output data. A number of layers may be provided between the input layer and the output layer (e.g. hidden layers). The training of the neural network (e.g., adapting the layers of the neural network, adjusting Model parameters) may use or may be based on any kind of training principle, such as backpropagation (e.g., using the backpropagation algorithm).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML (e.g. weights) parameters adjusting the input information.

The AI/ML may include a recurrent neural network in which neurons transfer the information in a configuration in which the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, processing, and estimations using time series data.

An LSTM network may include a network of LSTM cells that may process the attributes provided for an instance of time as input data, such as attributes provided for the instance of time, and one or more previous outputs of the LSTM that have taken in place in previous instances of time, and accordingly, obtain the output data. The number of the one or more previous inputs may be defined by a window size, and the weights associated with each previous input may be configured separately. The window size may be arranged according to the processing, memory, and time constraints and the input data. The LSTM network may process the features of the received raw data and determine a label for an attribute for each instance of time according to the features. The output data may include or represent a label associated with the input data.

In various examples, the neural network may be configured in top-down configuration in which a neuron of a layer provides output to a neuron of a lower layer, which may help to discriminate certain features of an input.

In accordance with various aspects, the AI/ML may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP moving into the next state. Accordingly, the MDP may obtain a function that maps the current state to an action to be determined with the purpose of maximizing the rewards. Accordingly, input data for a reinforcement learning model may include information representing a state, and an output data may include information representing an action.

Reinforcement learning (RL) is a type of machine learning that focuses on training an agent to make decisions by interacting with an environment. The agent learns to perform actions to achieve a goal by receiving feedback in the form of rewards or penalties. As a machine learning model, reinforcement learning models learn from data (in this case, the agent's experiences and interactions with the environment) to adapt their behavior and improve their performance over time. Since machine learning is a subset of AI, reinforcement learning models are also considered AI models, as they aim to perform tasks that require human-like decision-making capabilities.

The AI/ML may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

The AI/ML may include a generative neural network. The generative neural network may process input data in order to generate new sets, hence the output data may include new sets of data according to the purpose of the AI/ML. In various examples, the AI/ML may include a generative adversarial network (GAN) model in which a discrimination function is included with the generation function, and while the generation function may generate the data according to model parameters of the generation function and the input data, the discrimination function may distinguish the data generated by the generation function in terms of data distribution according to model parameters of the discrimination function. In accordance with various aspects of this disclosure, a GAN may include a deconvolutional neural network for the generation function and a CNN for the discrimination function.

The AI/ML may include a trained AI/ML that is configured to provide the output as provided in various examples in this disclosure based on the input data and one or more Model parameters obtained by the training. The trained AI/ML may be obtained via an online and/or offline training. A training agent may perform various operations with respect to the training at various aspects, including online training, offline training, and optimizations based on the inference results. The AI/ML may take any suitable form or utilize any suitable technique for training process. For example, the AI/ML may be trained using supervised learning, semi-supervised learning, unsupervised learning, or reinforcement learning techniques.

In supervised learning, the AI/ML may be obtained using a training dataset including both inputs and corresponding desired outputs (illustratively, input data may be associated with a desired or expected output for that input data). Each training instance may include one or more input data items and a desired output. The training agent may train the AI/ML based on iterations through training instances and using an objective function to teach the AI/ML to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training dataset including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The training agent may adjust the model parameters of the respective model based on outputs and inputs (i.e. output data and input data). The training agent may train the AI/ML according to the desired outcome. The training agent may provide the training data to the AI/ML to train the AI/ML. In various examples, the processor and/or the AI/ML unit itself may include the training agent, or another entity that may be communicatively coupled to the processor may include the training agent and provide the training data to the device, so that the processor may train the AI/ML.

In various examples, the device may include the AI/ML in a configuration that it is already trained (e.g. the Model parameters in a memory are already set for the purpose). It may be desirable for the AI/ML itself to have the training agent, or a portion of the training agent, in order to perform optimizations according to the output of inferences as provided in this disclosure. The AI/ML may include an execution unit and a training unit that may implement the training agent as provided in this disclosure for other examples. In accordance with various examples, the training agent may train the AI/ML based on a simulated environment that is controlled by the training agent according to similar considerations and constraints of the deployment environment.

The processor 1500 may implement the training agent, or another entity that may be communicatively coupled to the processor 1500 may include the training agent and provide the training input data to the device, so that the processor 1500 may train the AI/ML. The training agent may be part of the AI/ML unit 1502 described herein. Furthermore, the controller 1503 may control the AI/ML unit 1502 according to a predefined event. For example, the controller 1503 may provide instructions to the AI/ML unit 1502 to perform the inference and/or training in response to a received request from another entity. The controller 1503 may further obtain output of the AI/ML from the AI/ML unit 1502.

FIG. 16 shows an exemplary representation of a reinforcement learning (RL) model based AI/ML, that a processor (e.g. the processor 501, the processor 1300) may implement. The processor may determine an operating state from a plurality of operations states including a renewable energy operating state using an RL model. A reinforcement learning agent (RL agent) 1601 (e.g. the AI/ML unit 1302) may determine an action based on a first observation (i.e. state) made for the observation environment and model parameters of the RL model. An observation may be the state represented by environmental condition information of a renewable energy network access node 1605 at a first instance of time.

The RL agent 1601 may also obtain a first reward for the first instance of time with respect to a transition from a previous instance of time to the first instance of time, that may be represented by the first observation. Actions that the RL agent 1601 may include selecting an operating state for the renewable energy network access node 1605. For example, the RL agent 1601 may select the renewable energy operating state. Based on the nature of the RL model, the selection of an operating state may be arbitrary. In some aspects, the selection of the operating state may be based on a greedy approach, i.e. by selecting the operating state which has the highest estimated reward based on the last observation.

The RL agent 1601 may, based on the first observation, map the state represented with the first observation (e.g. the RAN related data representative of network performance and a metric indicative of a carbon footprint of the renewable energy network access node and/or a consumed power value) to an operating state that maximizes the reward according to the estimation of the RL agent 1601 based on the model parameters of the RL model. Accordingly, the RL agent 1601 may output an operating state to a controller 1603 (e.g. the controller 703). The controller 1603 may encode information representative of the selected operating state for a transmission to the renewable energy network access node. Accordingly, the state observable by the RL agent 1601 changes into a second instance of time.

At a second instance of time, the RL agent 1601 may obtain a second reward with respect to a second observation (e.g. updated RAN related data representative of network performance and an updated metric indicative of a carbon footprint of the renewable energy network access node and/or an updated consumed power value, which are updated with the previously selected operating state). Based on the second reward, the RL agent 1601 may update the model parameters of the RL model to be used for a further action. With each iteration for a new state and reward associated with the transition to the new state, the RL agent 1601 may learn or optimize the policy used to map the observations to the action of selecting operating states based on observations/states.

In one example, the reinforcement learning model may be based on Q-learning to provide the output in the particular state represented by the input according to a Q-function based on Model parameters. The Q-function may be represented with an equation: Qnew (st, at) ← (1-α) Q(st,at) + α (r + γ maxa(Q(st+1,a)) such that, s representing the state (observation) and a representing an action of selecting an operating state, st,at representing all state-action pairs (observation-selected update timescale pairs) with an index t, the new Q value of the corresponding state-action pair t is based on the old Q value for the state-action pair t and the sum of the reward r obtained by adding a particular remaining cell into the set of cells or removing the last added cell from the set of cells at in the state st with a discount rate γ that is between 0 and 1, in which the weight between the old Q value and the reward portion is determined by the learning rate α.

The discount factor may determine the importance of future rewards. A discount factor of 0 can make the agent "myopic" (or short-sighted) by only considering current rewards, while a factor close to 1 can make the agent strive for a long-term high reward. If the discount factor meets or exceeds 1, the action values may diverge, γ=1, all environment histories can become infinitely long, and utilities with additive, undiscounted rewards generally become infinite. Even with a discount factor only slightly lower than 1, Q-function learning leads to propagation of errors and instabilities when the value function is approximated with an artificial neural network. In that case, starting with a lower discount factor and increasing the discount value towards a final value may accelerate the learning.

FIG. 17 shows an exemplary radio access network architecture in which the radio access network is disaggregated into multiple units. In LTE or 5G NR, network access nodes, such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel. 15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1700 provided herein includes a radio unit (RU) 1701, a DU 1702, a CU 1703, a near RT-RIC 1704, and a service management and orchestration framework (SMO) 1705 including a non-RT RIC 1706. The skilled person would recognize that the illustrated structure may represent a logical architecture, in which one or more of the entities of the mobile communication network may be implemented by the same physical entity, or a distributed physical entity (a plurality of devices operating collectively) may implement one of the entities of the mobile communication network provided herein.

There are many approaches to provide the split among the multiple units. In this illustrative example, the CU 1703 (e.g. O-CU) may be mainly responsible for non-real time operations hosting the radio resource control (RRC), the PDCP protocol, and the service data adaptation protocol (SDAP). The DU (e.g. O-DU) 1702 may be mainly responsible for real-time operations hosting, for example, RLC layer functions, MAC layer functions, and Higher-PHY functions. RUs 1701 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1705 may provide functions to manage domains such as RAN management, Core management, Transport management, and the non-RT RIC 1706 may provide functions to support intelligent RAN optimization via policy-based guidance, AI/ML model management, etc.

The exemplary RAN 1700 is illustrated for the purpose of brevity. The skilled person would recognize the aspects provided herein and may also realize that the exemplary RAN 1700 may include further characterizations, such as the CU may also be -at least logically- distributed into two entities (e.g. CU-Control Plane, CU-User Plane), there may be various types of interfaces between different entities of the exemplary RAN 1700 (e.g. E2, F1, O1, X2, NG-u, etc.).

In accordance with the exemplary distributed RAN architecture, a terminal device may transmit radio communication signals to the RU 1701 and receive radio communication signals from the RU 1701. The processing associated with the communication is performed at the respective layers of the network stack by respective entities that are responsible to perform the corresponding function of the respective layers.

In accordance with various aspects of this disclosure and this exemplary RAN 1700, aspects associated with the management of radio resources may include MAC layer functions within the DU 1702. Accordingly, the DU 1702 may include aspects of a controller entity configured to manage radio resources in response to received RRM parameters (i.e. RRM outputs) provided herein and configured to manage radio resources for a communication via the communication channel that is established between the RU 1701 and a UE.

In accordance with various aspects of this disclosure, any one of a DU 1702 or CU 1703, a near RT-RIC 1704 or non-RT RIC 1706 may include the device 1250 to determine operating states of a renewable energy RU 1701.

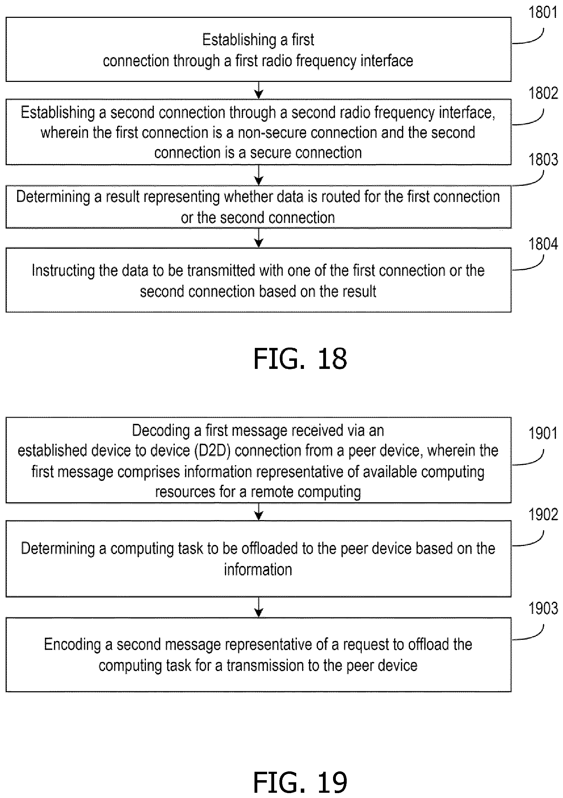

FIG. 18 shows an example of a method. The method may include: establishing 1801 a first connection through a first radio frequency interface; establishing 1802 a second connection through a second radio frequency interface, wherein the first connection is a non-secure connection and the second connection is a secure connection; determining 1803 a result representing whether data is routed for the first connection or the second connection; instructing 1804 the data to be transmitted with one of the first connection or the second connection based on the result.

FIG. 19 shows an example of a method. The method may include decoding 1901 a first message received via an established device to device (D2D) connection from a peer device, wherein the first message comprises information representative of available computing resources for a remote computing; determining 1902 a computing task to be offloaded to the peer device based on the information; encoding 1903 a second message representative of a request to offload the computing task for a transmission to the peer device.

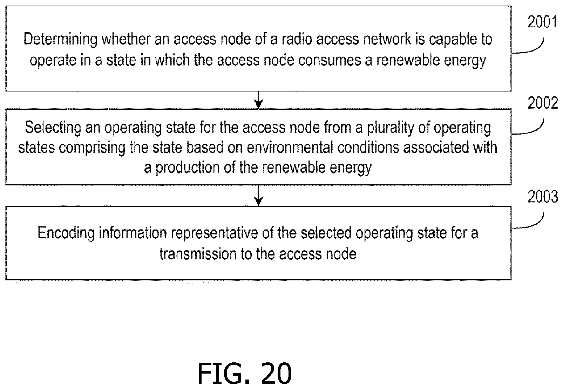

FIG. 20 shows an example of a method. The method may include determining 2001 whether an access node of a radio access network is capable to operate in a state in which the access node consumes a renewable energy; selecting 2002 an operating state for the access node from a plurality of operating states comprising the state based on environmental conditions associated with a production of the renewable energy; encoding 2003 information representative of the selected operating state for a transmission to the access node.

The following examples pertain to further aspects of this disclosure.

In example 1A, the subject matter includes an apparatus of a communication device, the apparatus may include a processor configured to: establish a first connection through a first radio frequency interface; establish a second connection through a second radio frequency interface, wherein the first connection is a non-secure connection and the second connection is a secure connection; determine a result representing whether data is routed for the first connection or the second connection; instruct the data to be transmitted with one of the first connection or the second connection based on the result.

In example 2A, the subject matter of example 1A, wherein the first connection is one connection of a dual radio connection in accordance with an IEEE 802.11 communication protocol; and wherein the second connection is another connection of the dual radio connection in accordance with the IEEE 802.11 communication protocol.

In example 3A, the subject matter of example 1A or example 2A, wherein the first connection is associated with a first internet protocol (IP) address and the second connection is associated with a second IP address different from the first IP address.

In example 4A, the subject matter of example 3A, wherein the processor is further configured to route the data for the first connection or the second connection based on an IP address included in the data.

In example 5A, the subject matter of any one of examples 1A to 4A, wherein the second connection is established with an IEEE 802.11 Access Point (AP) and includes a virtual private network (VPN) connection.

In example 6A, the subject matter of any one of examples 1A to 5A, wherein the first connection is a device to device (D2D) connection established with a further IEEE 802.11 terminal device.

In example 7A, the subject matter of any one of examples 1A to 6A, wherein the data includes an application layer data; wherein the processor is configured to route the application layer data within an IEEE 802.11 protocol stack to instruct the data to be transmitted with one of the first connection or the second connection.

In example 8A, the subject matter of any one of examples 1A to 7A, wherein the processor is further configured to determine the result based on a parameter of an application layer-software generating the data, wherein the parameter indicates whether the data is for the secure connection or for the non-secure connection.

In example 9A, the subject matter of example 8A, wherein the processor is further configured to store the parameter of the application layer software; wherein the processor is further configured to instruct further data of the application layer-software to be transmitted based on the stored parameter.

In example 10A, the subject matter of any one of examples 1A to 9A, wherein the data is to be transmitted to an IEEE 802.11 device; wherein the processor is further configured to determine a location of the IEEE 802.11 device; wherein the processor is further configured to determine the result based on the location of the IEEE 802.11 device.

In example 11A, the subject matter of example 10A, wherein if the IEEE 802.11 device is located at a distance within a distance range, the processor is configured to instruct the data to be transmitted using the first connection.

In example 12A, the subject matter of example 10A or example 11A, wherein the processor is further configured to determine the location of the IEEE 802.11 device based on radio communication signals received from the IEEE 802.11 device; wherein the processor is further configured to identify a service set identifier (SSID) within data packets received with the radio communication signals received from the IEEE 802.11 device to determine the location of the IEEE 802.11 device.

In example 13A, the subject matter of example 12A, wherein the processor is further configured to instruct the data to be transmitted with the first connection if the SSID of the IEEE 802.11 device and an SSID of the IEEE 802.11 terminal device are the same.

In example 14A, the subject matter of any one of examples 10A to 13A, wherein the processor is further configured to determine the location of the IEEE 802.11 device based on a receive signal strength indicator (RSSI) level of received radio communication signals.

In example 15A, the subject matter of example 14A, wherein the processor is further configured to instruct the data to be transmitted with the first connection if the RSSI level of the IEEE 802.11 device is higher than a threshold level.

In example 16A, the subject matter of any one of examples 1A to 15A, further may include: the first radio frequency interface configured to communicate with a first IEEE 802.11 radio unit of the IEEE 802.11 terminal device; the second radio frequency interface configured to communicate with a second IEEE 802.11 radio unit of the IEEE 802.11 terminal device.

In example 17A, the subject matter of example 16A, further may include: the first IEEE 802.11 radio unit configured to communicate using a first 802.11 frequency band; the second IEEE 802.11 radio unit configured to communicate using a second 802.11 frequency band.

In example 18A, the subject matter includes a method for a communication device, the method may include: establishing a first connection through a first radio frequency interface; establishing a second connection through a second radio frequency interface, wherein the first connection is a non-secure connection and the second connection is a secure connection; determining a result representing whether data is routed for the first connection or the second connection; instructing the data to be transmitted with one of the first connection or the second connection based on the result.

In example 19A, the subject matter of example 18A, wherein the first connection is one connection of a dual radio connection in accordance with an IEEE 802.11 communication protocol; and wherein the second connection is another connection of the dual radio connection in accordance with the IEEE 802.11 communication protocol.

In example 20A, the subject matter of example 18A or example 19A, wherein the first connection is associated with a first internet protocol (IP) address and the second connection is associated with a second IP address different from the first IP address.

In example 21A, the subject matter of example 20A, further may include routing the data for the first connection or the second connection based on an IP address included in the data.

In example 22A, the subject matter of any one of examples 18A to 21A, wherein the second connection is established with an IEEE 802.11 Access Point (AP) and includes a virtual private network (VPN) connection.

In example 23A, the subject matter of any one of examples 18A to 22A, wherein the first connection is a device to device (D2D) connection established with a further IEEE 802.11 terminal device.

In example 24A, the subject matter of any one of examples 18A to 23A, wherein the data includes an application layer data; wherein the method further includes routing the application layer data within an IEEE 802.11 protocol stack to instruct the data to be transmitted with one of the first connection or the second connection.

In example 25A, the subject matter of any one of examples 18A to 24A, further may include determining the result based on a parameter of an application layer-software generating the data, wherein the parameter indicates whether the data is for the secure connection or for the non-secure connection.

In example 26A, the subject matter of example 25A, further may include storing the parameter of the application layer software; instructing further data of the application layer-software to be transmitted based on the stored parameter.

In example 27A, the subject matter of any one of examples 18A to 26A, wherein the data is to be transmitted to an IEEE 802.11 device; wherein the method further includes determining a location of the IEEE 802.11 device; determining the result based on the location of the IEEE 802.11 device.

In example 28A, the subject matter of example 27A, wherein if the IEEE 802.11 device is located at a distance within a distance range, the processor is configured to instruct the data to be transmitted using the first connection.

In example 29A, the subject matter of example 27A or example 28A, further may include determining the location of the IEEE 802.11 device based on radio communication signals received from the IEEE 802.11 device; identifying a service set identifier (SSID) within data packets received with the radio communication signals received from the IEEE 802.11 device to determine the location of the IEEE 802.11 device.

In example 30A, the subject matter of example 29A, further may include instructing the data to be transmitted with the first connection if the SSID of the IEEE 802.11 device and an SSID of the IEEE 802.11 terminal device are the same.

In example 31A, the subject matter of any one of examples 27A to 30A, further may include determining the location of the IEEE 802.11 device based on a receive signal strength indicator (RSSI) level of received radio communication signals.

In example 32A, the subject matter of example 31A, further may include instructing the data to be transmitted with the first connection if the RSSI level of the IEEE 802.11 device is higher than a threshold level.

In example 33A, the subject matter of any one of examples 18A to 32A, further may include: communicating, via the first frequency interface, with a first IEEE 802.11 radio unit of the IEEE 802.11 terminal device; communicating, via the second frequency interface, with a second IEEE 802.11 radio unit of the IEEE 802.11 terminal device.

In example 34A, the subject matter of example 33A, further may include communicating, via the first IEEE 802.11 radio unit, using a first 802.11 frequency band; communicating, via the second IEEE 802.11 radio unit, using a second 802.11 frequency band.

In example 35A, a non-transitory computer-readable medium may include instructions which, if executed by a processor, cause the processor to perform the method of any one of examples 18 to 34A.

In example 1B, the subject matter includes an apparatus that may include a processor configured to: decode a first message received via an established device to device (D2D) connection from a peer device, wherein the first message includes information representative of available computing resources for a remote computing; determine a computing task to be offloaded to the peer device based on the information; encode a second message representative of a request to offload the computing task for a transmission to the peer device.

In example 2B, the subject matter of example 1B, wherein the processor is further configured to encode a capability request message representative of a request to receive the information representative of the available computing resources for the remote computing for a transmission to the peer device.

In example 3B, the subject matter of example 1B or example 2B, wherein the second message further includes metadata associated with at least one of the computing tasks and/or one or more selected computing resources from the available computing resources.

In example 4B, the subject matter of any one of examples 1B to 3B, wherein the processor is further configured decode a third message, received in response to a transmitted second message, wherein the third message is representative of a data session configured for a data transfer associated with an offload of the computing task.

In example 5B, the subject matter of example 4B, wherein the third message includes a response to the request to offload the computing task.

In example 6B, the subject matter of any one of examples 1B to 5B, wherein the processor is further configured to determine the computing task based on information about input data to be used for the computing task and/or an execution environment designated for the computing task.

In example 7B, the subject matter of any one of examples 1B to 6B, wherein the processor is further configured to determine the computing task based on information representative of the available computing resources received from the peer device, and further information representative of available computing resources of further peer devices.

In example 8B, the subject matter of example 7B, wherein the further information representative of available computing resources of further peer devices includes information representative of whether each peer device of the further peer devices has an established connection with the apparatus.

In example 9B, the subject matter of any one of examples 1B to 8B, wherein the processor is further configured to determine the computing task based on mapping information received from a database, wherein the mapping information is indicative of a mapping between a plurality of computing task types and a plurality of computing resource types.

In example 10B, the subject matter of any one of examples 1B to 9B, wherein the processor is further configured to determine the computing task based on trigger information representative of at least one of: an instruction to offload the computing task, a processor thresholding threshold of the processor, a temperature threshold, and/or a battery level.

In example 11B, the subject matter of any one of examples 1B to 10B, wherein the processor is further configured to determine the computing task based on information representative of previously offloaded computing tasks and one or more performance metrics associated with computing of the previously offloaded computing tasks.

In example 12B, the subject matter of any one of examples 1B to 11B, wherein the processor is further configured to store information representative of one or more performance metrics associated with a computing of the computing task in a memory, wherein the one or more performance metrics include at least one of a period of time for the computing of the computing task, a cost of execution of the computing of the computing task, a latency associated with the computing task, a type of category of the computing task.

In example 13B, the subject matter of any one of examples 1B to 12B, wherein the processor is further configured to store information representative of one or more performance metrics associated with a computing of further computing tasks in the memory, wherein the further computing tasks are processed by the processor or further radio communication devices.

In example 14B, the subject matter of any one of examples 1B to 13B, wherein the peer device is an intermediary device between the apparatus and an entity may include the available computing resources for the remote computing.

In example 15B, the subject matter of any one of examples 1B to 14B, wherein the computing task is a first computing task of a plurality of computing tasks, wherein the processor performs a computing of a second computing task of the plurality of computing tasks.

In example 16B, the subject matter of any one of examples 1B to 15B, wherein the computing task includes at least one of a graphical processing unit intensive computing task, an artificial intelligence or machine learning (AI/ML) computing task.

In example 17B, the subject matter of any one of examples 1B to 16B, wherein the processor is further configured to decode a plurality of messages received from a plurality of further communication devices; wherein each message of the plurality of further communication devices is representative of available computing resources for a remote computing of the respective further communication device; wherein the processor is further configured to determine the peer device based on the plurality of messages.

In example 18B, the subject matter of any one of examples 1B to 17B, wherein the established D2D connection includes a secure connection.

In example 19B, the subject matter of any one of examples 1B to 18B, further may include a transceiver configured to communicate via a D2D communication.

In example 20B, the subject matter includes a method that may include: decoding a first message received via an established device to device (D2D) connection from a peer device, wherein the first message includes information representative of available computing resources for a remote computing; determining a computing task to be offloaded to the peer device based on the information; encoding a second message representative of a request to offload the computing task for a transmission to the peer device.

In example 21B, the subject matter of example 20B, further may include encoding a capability request message representative of a request to receive the information representative of the available computing resources for the remote computing for a transmission to the peer device.

In example 22B, the subject matter of example 20B or example 21B, wherein the second message further includes metadata associated with at least one of the computing tasks and/or one or more selected computing resources from the available computing resources.

In example 23B, the subject matter of any one of examples 20B to 22B, decoding a third message, received in response to a transmitted second message, wherein the third message is representative of a data session configured for a data transfer associated with an offload of the computing task.

In example 24B, the subject matter of example 23B, wherein the third message includes a response to the request to offload the computing task.

In example 25B, the subject matter of any one of examples 20B to 24B, further may include determining the computing task based on information about input data to be used for the computing task and/or an execution environment designated for the computing task.

In example 26B, the subject matter of any one of examples 20B to 25B, further may include determining the computing task based on information representative of the available computing resources received from the peer device, and further information representative of available computing resources of further peer devices.

In example 27B, the subject matter of example 26B, wherein the further information is representative of available computing resources of further peer devices includes information representative of whether each peer device of the further peer devices has an established connection with the apparatus.

In example 28B, the subject matter of any one of examples 20B to 27B, further may include determining the computing task based on mapping information received from a database, wherein the mapping information is indicative of a mapping between a plurality of computing task types and a plurality of computing resource types.

In example 29B, the subject matter of any one of examples 20B to 28B, further may include determining the computing task based on trigger information representative of at least one of: an instruction to offload the computing task, a processor thresholding threshold of the processor, a temperature threshold, and/or a battery level.

In example 30B, the subject matter of any one of examples 20B to 29B, further may include determining the computing task based on information representative of previously offloaded computing tasks and one or more performance metrics associated with computing of the previously offloaded computing tasks.

In example 31B, the subject matter of any one of examples 20B to 30B, further may include storing information representative of one or more performance metrics associated with a computing of the computing task in a memory, wherein the one or more performance metrics include at least one of a period of time for the computing of the computing task, a cost of execution of the computing of the computing task, a latency associated with the computing task, a type of category of the computing task.

In example 32B, the subject matter of any one of examples 20B to 31B, further may include storing information representative of one or more performance metrics associated with a computing of further computing tasks in the memory, wherein the further computing tasks are processed by the processor or further radio communication devices.

In example 33B, the subject matter of any one of examples 20B to 32B, wherein the peer device is an intermediary device between the apparatus and an entity may include the available computing resources for the remote computing.

In example 34B, the subject matter of any one of examples 20B to 33B, wherein the computing task is a first computing task of a plurality of computing tasks, wherein the processor performs a computing of a second computing task of the plurality of computing tasks.

In example 35B, the subject matter of any one of examples 20B to 34B, wherein the computing task includes at least one of a graphical processing unit intensive computing task, an artificial intelligence or machine learning (AI/ML) computing task.

In example 36B, the subject matter of any one of examples 20B to 34B, further may include decoding a plurality of messages received from a plurality of further communication devices; wherein each message of the plurality of further communication devices is representative of available computing resources for a remote computing of the respective further communication device; determining the peer device based on the plurality of messages.

In example 37B, the subject matter of any one of examples 20B to 35B, wherein the established D2D connection includes a secure connection.

In example 38B, a non-transitory computer-readable medium may include instructions which, if executed by a processor, cause the processor to perform the subject matter of any one of examples 20B to 37B.

In example 1C, the subject matter includes an apparatus may include a processor configured to: determine whether an access node of a radio access network is capable to operate in a state in which the access node consumes a renewable energy; select an operating state for the access node from a plurality of operating states may include the state based on environmental conditions associated with a production of the renewable energy; encode information representative of the selected operating state for a transmission to the access node.

In example 2C, the subject matter of example 1C, wherein the plurality of operating states further includes a power off state and a non-renewable energy consuming state.

In example 3C, the subject matter of example 1C or 2C, wherein the environmental conditions associated with a production of the renewable energy includes information representative of at least one of: a geographic information for an area surrounding the access node; a location of the access node or a cell which the access node serves; weather at the location; cloud cover at the location; a presence of rain at the location; weather temperature at the location.

In example 4C, the subject matter of any one of examples 1C to 3C, wherein the processor is further configured to predict an availability of the renewable energy based on the environmental conditions associated with the production of the renewable energy.

In example 5C, the subject matter of example 4C, wherein the processor is further configured to select the operating state based on network information representative of network conditions of the radio access network.

In example 6C, the subject matter of clam 5C, wherein the network information includes at least one performance indicator may include information representative of at least one of a cell uplink and/or downlink physical resource block usage; an average data throughput of the access node; an average data throughput of user equipments (UEs); a number of connected and/or attached UEs.

In example 7C, the subject matter of any one of examples 4C to 6C, wherein the processor is further configured to select the operating state based on a received operator information representative of a preference of a mobile network operator.

In example 8C, the subject matter of example 7C, wherein the operator information includes a weight and/or a priority for a selection of the operating state from the plurality of operating states.

In example 9C, the subject matter of any one of examples 4C to 9C, wherein the processor is further configured to predict a network condition of a cell served by the access node based on the network information.

In example 10C, the subject matter of example 9, wherein the processor is further configured to determine a first performance metric for the UEs within the cell based on the predicted network condition and the predicted availability of the renewable energy; wherein the processor is further configured to determine a second performance metric for the UEs within the cell based on the predicted network condition for a further operating state.

In example 11C, the subject matter of example 10C, wherein the processor is further configured to select the operating state based on the first performance metric, the second performance metric, and the operator information.

In example 12C, the subject matter of any one of examples 1C to 11C, wherein the processor is configured to select the operating state using a trained artificial intelligence and/or machine learning (AI/ML) model; wherein the AI/ML is configured to receive input data may include information representative of the environmental conditions associated with a production of the renewable energy and the network information; wherein the AI/ML is configured to provide output data representative of a selected operating state from the plurality of operating states.

In example 13C, the subject matter of example 12C, wherein the state is selected from the plurality of operating states using an ε greedy approach based on the information representative of the environmental conditions associated with a production of the renewable energy and the network information.

In example 14C, the subject matter of example 13C, wherein the AI/ML model includes a reinforcement learning (RL) model; wherein a reward of the reinforcement learning (RL) model is based on an observed performance metric associated with a consumed power and a carbon footprint of the access node, and a network performance metric of the cell.

In example 15C, the subject matter of any one of examples 1C to 14C, wherein the renewable energy includes a solar energy.

In example 16C, the subject matter of any one of examples 1C to 15C, further may include a transceiver to communicate the encoded information to the access node.

In example 17C, an open radio access network (O-RAN) node of an O-RAN network, the node may include: the subject matter of any one of examples 1C to 16C; an interface configured to send the encoded information to an O-RAN radio unit (O-RU).

In example 18C, the subject matter includes a method that may include: determining whether an access node of a radio access network is capable to operate in a state in which the access node consumes a renewable energy; selecting an operating state for the access node from a plurality of operating states may include the state based on environmental conditions associated with a production of the renewable energy; encoding information representative of the selected operating state for a transmission to the access node.

In example 19C, the subject matter of example 18C, wherein the plurality of operating states further includes a power off state and a non-renewable energy consuming state.

In example 20C, the subject matter of example 18C or 19C, wherein the environmental conditions associated with a production of the renewable energy includes information representative of at least one of: a geographic information for an area surrounding the access node; a location of the access node or a cell which the access node serves; weather at the location; cloud cover at the location; a presence of rain at the location; weather temperature at the location.

In example 21C, the subject matter of any one of examples 18C to 20C, further may include predicting an availability of the renewable energy based on the environmental conditions associated with the production of the renewable energy.

In example 22C, the subject matter of example 21C, further may include selecting the operating state based on network information representative of network conditions of the radio access network.

In example 23C, the subject matter of clam 22C, wherein the network information includes at least one performance indicator may include information representative of at least one of a cell uplink and/or downlink physical resource block usage; an average data throughput of the access node; an average data throughput of user equipments (UEs); a number of connected and/or attached UEs.

In example 24C, the subject matter of any one of examples 21C to 23C, further may include selecting the operating state based on a received operator information representative of a preference of a mobile network operator.

In example 25C, the subject matter of example 24C, wherein the operator information includes a weight and/or a priority for a selection of the operating state from the plurality of operating states.

In example 26C, the subject matter of any one of examples 21C to 25C, further may include predicting a network condition of a cell served by the access node based on the network information.

In example 27C, the subject matter of example 26C, further may include determining a first performance metric for the UEs within the cell based on the predicted network condition and the predicted availability of the renewable energy; determining a second performance metric for the UEs within the cell based on the predicted network condition for a further operating state.

In example 28C, the subject matter of example 27C, further may include selecting the operating state based on the first performance metric, the second performance metric, and the operator information.

In example 29C, the subject matter of any one of examples 18C to 28C, further may include selecting the operating state using a trained artificial intelligence and/or machine learning (AI/ML) model; wherein the AI/ML is configured to receive input data may include information representative of the environmental conditions associated with a production of the renewable energy and the network information; wherein the AI/ML is configured to provide output data representative of a selected operating state from the plurality of operating states.

In example 30C, the subject matter of example 29C, wherein the state is selected from the plurality of operating states using an ε greedy approach based on the information representative of the environmental conditions associated with a production of the renewable energy and the network information.

In example 31C, the subject matter of example 30C, wherein the AI/ML model includes a reinforcement learning (RL) model; wherein a reward of the reinforcement learning (RL) model is based on an observed performance metric associated with a consumed power and a carbon footprint of the access node, and a network performance metric of the cell.

In example 32C, the subject matter of any one of examples 18C to 31C, wherein the renewable energy includes a solar energy.

In example 33C, a non-transitory computer-readable medium may include instructions which, if executed by a processor, cause the processor to perform the subject matter of any one of examples 18C to 32C.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

All acronyms defined in the above description additionally hold in all claims included herein.

## Claims

1. An apparatus of a communication device, the apparatus comprising a processor configured to:
establish a first connection via a first radio frequency interface;
establish a second connection via a second radio frequency interface, wherein the first connection is a non-secure connection and the second connection is a secure connection;
determine a result representing whether data is routed for the first connection or the second connection;
instruct the data to be transmitted with one of the first connection or the second connection based on the result.

2. The apparatus of claim 1,
wherein the first connection is one connection of a dual radio connection in accordance with an IEEE 802.11 communication protocol; and wherein the second connection is another connection of the dual radio connection in accordance with the IEEE 802.11 communication protocol.

3. The apparatus of claim 1 or claim 2,
wherein the first connection is associated with a first internet protocol (IP) address and the second connection is associated with a second IP address different from the first IP address.

4. The apparatus of claim 3,
wherein the processor is further configured to route the data for the first connection or the second connection based on an IP address included in the data.

5. The apparatus of any one of claims 1 to 4,
wherein the second connection is established with an IEEE 802.11 Access Point (AP) and comprises a virtual private network (VPN) connection.

6. The apparatus of any one of claims 1 to 5,
wherein the first connection is a device to device (D2D) connection established with a further IEEE 802.11 terminal device.

7. The apparatus of any one of claims 1 to 6,
wherein the data comprises an application layer data;
wherein the processor is configured to route the application layer data within an IEEE 802.11 protocol stack to instruct the data to be transmitted with one of the first connection or the second connection.

8. The apparatus of any one of claims 1 to 7,
wherein the processor is further configured to determine the result based on a parameter of an application layer-software generating the data, wherein the parameter indicates whether the data is for the secure connection or for the non-secure connection.

9. The apparatus of any one of claims 1 to 8,
wherein the data is to be transmitted to an IEEE 802.11 device;
wherein the processor is further configured to determine a location of the IEEE 802.11 device;
wherein the processor is further configured to determine the result based on the location of the IEEE 802.11 device.

10. The apparatus of claim 10,
wherein if the IEEE 802.11 device is located at a distance within a distance range, the processor is configured to instruct the data to be transmitted using the first connection.

11. The apparatus of claim 9 or 10,
wherein the processor is further configured to determine the location of the IEEE 802.11 device based on radio communication signals received from the IEEE 802.11 device;
wherein the processor is further configured to identify a service set identifier (SSID) within data packets received with the radio communication signals received from the IEEE 802.11 device to determine the location of the IEEE 802.11 device.

12. The apparatus of any one of claims 9 to 11,
wherein the processor is further configured to determine the location of the IEEE 802.11 device based on a receive signal strength indicator (RSSI) level of received radio communication signals.

13. The apparatus of any one of claims 1 to 12, further comprising:
the first radio frequency interface configured to communicate with a first IEEE 802.11 radio unit of the IEEE 802.11 terminal device;
the second radio frequency interface configured to communicate with a second IEEE 802.11 radio unit of the IEEE 802.11 terminal device.

14. A method for a communication device, the method comprising:
establishing a first connection via a first radio frequency interface;
establishing a second connection via a second radio frequency interface, wherein the first connection is a non-secure connection and the second connection is a secure connection;
determining a result representing whether data is routed for the first connection or the second connection;
instructing the data to be transmitted with one of the first connection or the second connection based on the result.

15. A non-transitory computer-readable medium comprising instructions which, if executed by a processor, cause the processor to perform the method of claim 14.
